(19)

Europäisches
Patentamt
European
Patent Office
Office européen
des brevets

(11) **EP 2 926 904 A1**

(12) **EUROPEAN PATENT APPLICATION**

(43) Date of publication:
07.10.2015 Bulletin 2015/41

(21) Application number: 14468002.2

(22) Date of filing: 01.04.2014

(51) Int Cl.:
*B01J 37/03* (2006.01)        *B01J 37/18* (2006.01)
*B01J 21/06* (2006.01)        *B01J 23/75* (2006.01)
*B01J 23/755* (2006.01)      *B01J 35/02* (2006.01)
*B01J 35/10* (2006.01)        *B01J 37/02* (2006.01)
*C01B 3/40* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Kemijski Institut
1000 Ljubljana (SI)**

(72) Inventors:
• **Osojnik Crnivec, Ilija Gasan
1411 Izlake (SI)**

• **Djinovic, Petar
1000 Ljubljana (SI)**
• **Pintar, Albin
1000 Ljubljana (SI)**
• **Erjavec, Bostjan
1230 Domzale (SI)**

(74) Representative: **Macek, Gregor
ITEM d.o.o.
Resljeva 16
1000 Ljubljana (SI)**

(54) **Catalyst support, a methof for producing thereof, a catalyst comprising said support and the process for converting gas mixtures of methane and carbon dioxide into syngas using said catalyst**

(57)    The invention applies to the field of generating energy products and chemicals with high added value from renewable and alternative sources and examines the conversion of gas mixtures of methane and carbon dioxide into syngas. The developed multifunctional catalyst is composed of:
a) bimetallic nanoparticles where primarily adsorption and activation of methane takes place (cleavage of C-H bonds) and
b) homogeneous solid solution of mixed metal oxide support where adsorption and activation of carbon dioxide takes place.

The proposed design of the catalyst enables stable functioning of the process with good activity for the conversion of methane and carbon dioxide into syngas and extremely low selectivity for forming inactive carbon with consequently low level of coke accumulation on the surface of used catalysts.

The process of catalytic conversion of dry or moist mixtures of methane and carbon dioxide is carried out in a two-phase reactor system at temperatures from 973 to 1173 K and total pressures from 1 to 20 bar. The invention can be used for improving the energy value of the introduced gaseous mixtures or for producing quality raw material (syngas) for the production of fuel, fuel additives and other chemicals from renewable sources.

**EP 2 926 904 A1**

**Description**

**Field of the Invention**

The invention applies to the field of generating energy products and chemicals with high added value from renewable and alternative sources and examines the conversion of gas mixtures of methane and carbon dioxide into syngas.

**Background to the Invention**

Carbon dioxide, as the most important anthropogenic greenhouse gas, is responsible for the majority of the growth of the total radiative forcing of long-lasting greenhouse gases in the Earth's atmosphere over the last decades. In modern procedures of producing methane-rich gas mixtures from alternative and renewable sources, considerable quantities of carbon dioxide are created as a by-product. Direct use of methane- and carbon-dioxide-rich gas mixtures as energy carriers or as raw materials for the catalytic conversion is not possible with industrial catalysts and currently available technology. For this purpose, gas purification is performed prior to the utilisation of gas mixtures in order to remove the excess carbon dioxide. The submitted invention, namely a solid catalyst composed of two metallic phases, makes it possible to effectively, directly and simultaneously convert methane and carbon dioxide from alternative and renewable sources into syngas. The obtained syngas has from 15 to 25 % higher calorific value than the introduced feed mixture, higher combustion efficiency in power-driven assemblies and is also a high quality feedstock for large scale production of synthetic fuels, fuel additives and other chemicals with high added value.

The established procedures for the production of syngas are (K. Liu, C. Song, V. Subramani, Hydrogen and Syngas Production and Purification Technologies, New York: Wiley (2010), p. 6-7):

- steam reforming,
- partial oxidation,
- autothermal reforming,
- gasification and pyrolysis.

The first three processes have several shortcomings, the most important of which being most definitely the use of fossil fuels resources, since it is possible in these procedures to directly use gas mixtures with a high content of methane, such as for example natural gas. During the exploitation of alternative and renewable sources, for example biomethanisation with anaerobic microbial degradation of biodegradable waste, gas mixtures with low content of water vapour and also excess concentration of carbon dioxide are created, thus the use of such gas mixtures in the aforementioned processes is not established. A syngas produced with the listed forms of reforming has a molar ratio $H_2 : CO$ equal to or greater than 2 : 1 and is therefore not suitable for some synthetic routes in C1 and C2 chemistry, such as for example synthesis of partially oxidised lower hydrocarbons, various reactions of carbonylation and single stage large scale heterogeneous catalytic processes for the production of dimethyl ether. Furthermore, in these procedures complex process equipment is used, which is reflected in high investment and operating costs. It is namely required to add considerable amounts of water vapour into the reformer or reaction mixture that prevent the accumulation of carbon or formation of coke on the surface of the catalyst and its subsequent deactivation. Due to the extremely high evaporation enthalpy of water, the need for input of energy into the system when adding the surplus water vapour increases significantly. Also, in partial oxidation and autothermal reforming it is very demanding to maintain the suitable operating temperature due to the exothermal processes taking place on the catalyst surface. Even the processes of gasification and pyrolysis have some shortcomings, because a syngas with molar ratio of $H_2 : CO : CO_2$ from 1 : 1 : 1 to 1.5 : 1 : 0.5 is produced during the processes when using coal, biomass and other complex input raw materials. Additional side products in the process are tar and impurities that contain sulphur, phosphorous, arsenic and nitrogen which in the subsequent procedures of the exploitation of the produced syngas require additional conditioning and purification, since otherwise they cause the deterioration of the process equipment, faster wear of gas engines and consequently high costs of process maintenance.

An alternative process for producing syngas that is still in the development phase is the so called process of dry reforming of methane or simultaneous conversion of methane and carbon dioxide into syngas (equation 1).

$$CH_4 + CO_2 \leftrightarrow 2H_2 + 2CO$$

$$\Delta H°_{298 K} = 247 \text{ kJ/mol} \qquad (1)$$

The process enables simultaneous consumption of two greenhouse gases, methane and carbon dioxide, in gas mixtures with low total concentration of water vapour or even in the total absence of it. In terms of stoichiometry, syngas produced with dry reforming of methane has a low ratio of $H_2 : CO$ (1 : 1) and is thus subsequently also usable in processes where the high ratio between hydrogen and carbon monoxide is not suitable.

The process of heterogeneously catalysed simultaneous conversion of methane and carbon dioxide into syngas is carried out in a two-phase reactor system in which methane is contacted with an oxidising agent (namely, carbon dioxide and optionally also a small concentration of water vapour) in the presence of heterogeneous catalyst. Catalytic conversion with carbon dioxide into syngas takes place at atmospheric pressure and high temperatures (in the range between 973 and 1273 K).

The weakness of the process of dry reforming of methane is excessive growth of carbon fragments on the surface of commercially available catalysts that can result in their deactivation and can also lead to physical plugging of the reformer. Laosiripojan and Assabumrungrat (Appl Catal B 60 (2005) 107-116) report 90 to 97 % deactivation and total encapsulation of the catalyst surface (over 5 wt. % Ni, supported on the $Al_2O_3$ carrier) during the first hours of operation in methane and carbon dioxide feed streams of various compositions (molar ratio $CH_4 : CO_2$ from 0.25 : 1 to 3.3 : 1).

Numerous studies in scientific literature are thus dedicated to studying procedures of regeneration of the used catalysts, changing of the reaction conditions and the use of dedicatedly synthetized catalysts. With effective regeneration of the catalyst in either reductive ($H_2$) or oxidative ($O_2$, $CO_2$, $H_2O$) atmosphere, it is possible to extend the catalyst lifetime and consequently significantly lower the operating costs of reforming. Studies of regeneration show that complete restoration of catalytic activity is very difficult, since smaller amounts of carbon often remain on the catalyst after gasification. Because accumulated carbon encapsulates metal particles on the catalyst, after the regeneration of severely coked surfaces a smaller content of metal on the catalyst support (Fuel 65 (1986) 1377-1382; Appl Catal A 329 (2007) 68-78) is also observed.

By selecting suitable reaction conditions, it is possible to partially avoid the accumulation of carbon in the reaction of dry reforming of methane (Chem Eng Sci 43 (1988) 3049-3062; Fuel Process Technol 42 (1995) 269-289), but to achieve extreme conditions (high temperature) large amounts of energy are used and the structure of present catalysts is additionally thermally stressed, which significantly reduces their stability in the process.

The literature lists numerous synthesis approaches for improving the resistance of catalysts to coke accumulation, which includes the use of various methods of preparation of catalysts, various species of active catalytic components and various types of carrying materials and promoters. Precious metals enable stable operation of the catalyst in the process of dry reforming of methane (Appl Catal A 170 (1998) 177-187, J Catal 255 (2008) 259-268), because during their operation they do not form carbides that are precursors to coke accumulation on the catalyst surface. Djinović et al. (Chem Eng Process 50 (2011) 1054-1062), when studying dry reforming of methane in tests involving feeding the reactor with model biogas mixtures (molar ratio $CH_4 : CO_2$ from 2.3 : 1 to 0.7 : 1), used catalysts based on precious metals, namely on $\gamma$-$Al_2O_3$ applied Ru (3 wt. %) and on $CeO_2$ supported Rh (2 wt. %). As evident from the results of their work, the used catalysts show high activity, high stability and good resistance to the formation of inert carbon (less than 0.7 wt. % C after a 23-hour test), but due to the high price of active metals, they are not suitable for commercial use.

Bimetallic alloys of nickel with another transition metal are significantly cheaper than catalysts based on precious metals and show an improved resistance to the accumulation of carbon compared to the monometallic catalysts (J Catal 249 (2007) 300-310). San-José-Alonso et al. (Appl Catal A 371 (2009) 54-59) compared bimetallic catalysts, namely on $\gamma$-$Al_2O_3$ supported Ni and Co with total active metal loading of 9 wt. % (mass ratio of Ni : Co of 0.125 : 1, 1 : 1 and 8 : 1), and have measured a relatively high activity of the tested materials (conversion of $CH_4$ from 56 - 71 %, catalyst mass 180 mg, GHSV = 22 000 h$^{-1}$), whereby the catalyst with an excess of nickel (mass ratio of Ni : Co = 8 : 1) in the active metal showed the lowest stability in the process. Despite the achieved results, the catalysts maintained a relatively high level of coke accumulation, because in a relatively short time, namely during 6 hour operation, they accumulated from 2 to 27 wt. % of carbon on their surface.

Furthermore, when designing effective heterogeneous catalysts for dry reforming of methane, it is important to develop new carrier materials that enable strong interaction with active metals, good structural and surface properties and as a result improved operation and stability of the catalyst (Appl Catal A 317 (2007) 299-309; Int J Hydrogen Energy 37 (2012) 15966-15975). In doing so, it is important to use materials with superior redox properties. High mobility of oxygen within the crystalline structure of $CeO_2$ is well known, thus this oxide in pure form or with the addition of La, Y, Zr or Mg is often used as the carrier in preparation of heterogeneous catalysts. Osojnik Č rnivec *et al.* (*Chem Eng J* **207-208** (2012) 299-307) and Djinovi Ć *et al.* (*Appl Catal B* **125** (2012) 259-270) have shown that the morphology of the

prepared $CeO_2$-$ZrO_2$ materials is strongly dependent on the synthesis method and reaction parameters, whereby the main characteristic line of separation between the prepared materials is the level of nanocrystallinity and homogeneity of the represented crystal phase. Furthermore, it is evident from the results of these studies that by increasing the total loading of Ni and Co on the $CeO_2$-$ZrO_2$ carrier over 6 wt. %, the specific activity of the catalyst for the conversion of methane and carbon dioxide, expressed per unit of active metal mass, decreases significantly (molar ratio $CH_4$ : $CO_2$ od 2.3 : 1 do 0.7 : 1). The flaw of these catalysts is the fast accumulation of carbon on the surface of the catalyst during the temperature-programmed reaction (from 2.5 to 50 wt. % C after a 24-hour test) as a result of migration and growth of Ni and Co particles in the reductive atmosphere.

In patent databases several types of developed materials are stated. WO 2009/045112 A1 describes the process for partial oxidation of natural gas over a heterogeneous catalyst based on at least one metal, supported a reducible oxide carrier, preferably based on 0.5 wt. % Au and 35 wt. % $CeO_2$, supported on $Al_2O_3$ material by means of impregnation. From the above patent application, it is evident that when feeding the reactor with diluted natural gas (namely methane diluted with nitrogen and helium in molar ratio 1 : 1 : 10) and high concentrations of carbon dioxide (molar ratio $CH_4$ : $CO_2$ = 1 : 1) the operation of the used catalyst's is not stable (> 50 % drop of activity during a 2 hour operation at 1073 K).

US 2011/0105630 A1 applies for various heterogeneous catalysts for the process of hydrogenation of carbon dioxide with an emphasis on the so called reverse water gas shift (RWGS) reaction. These catalysts are composed of an inert carrier onto which in the following phase a catalytically active oxide material is deposited, preferably $CeO_2$ and various metal promoters (e.g. Fe, Mn and K). In the process of dry reforming of methane, RWGS takes place as a side reaction that uses the available carbon dioxide, therefore such catalysts are not suitable for use in the process of converting the mixture of methane and carbon dioxide.

US 5,744,419 describes processes for partial oxidation and oxidation reforming of methane, natural gas or biogas on a heterogeneous catalyst based on Ni and Co supported on granulated or pelleted sintered carrying material with low specific surface area (surface area (BET method): 0.002 - 5.0 $m^2$/g), whereby on the catalyst the particles of nickel and cobalt are separated with a film of alkaline-earth oxides that prevents the formation of a Ni-Co alloy. Due to the poor interaction between (i) Ni and Co and (ii) between active metals and the carrier, the produced material is not suitable for use in the process of dry reforming of methane.

US 7,985,710 B2 describes the catalysts for converting dry gas mixtures of methane and carbon dioxide into syngas. Catalysts described in the above mentioned patent are produced by simultaneous precipitation of active components and the carrying material and are composed of $Al^{3+}$-$Mg^{2+}$ spinel and spinel-like oxides with integrated active metals (Ni, Co, ...). The base of the catalyst (spinel) is irreducible, while the active metals are reduced at relatively high temperatures (from 973 to 1273 K with maximum hydrogen consumption above 1073 K). Despite the indicated high activities (90 % conversion of methane, catalyst mass 50 mg, WHSV = 187 NL/($g_{kat}$×h), molar ratio $CH_4$ : $CO_2$ = 1 : 1), the poor redox properties of the catalyst are unfavourable for the use of the feed stream with a changing composition (namely with a non-constant ratio of $CH_4$ : $CO_2$), such as for example biogas that is obtained directly from the bioreactor.

**Summary of the Invention**

The present invention solves the problems encountered in the prior art by providing novel catalyst carriers, catalysts and processes.

In a first aspect the present invention provides a carrier material for carrying active metal phases, the carrier material comprising a homogenous solid solution of $Ce_xZr_{1x}O_{2-y}$ having a face-centred cubic unit cell crystalline structure; wherein x is greater than 0 and less than 1 and y is from 0 to 1; and wherein x is not 0.5.

In a second aspect the present invention provides a process for making a carrier material for carrying active metal phases, comprising: a solution formation step of preparing a supersaturated solution of a salt of cerium and of a salt of zirconium and adding the solution to an organic solvent to form a precursor solution; a crystal formation step of forming suspended solids in the precursor solution; a collection step of separating the suspended solids from the precursor solution; a drying step of heating the separated solids; and a calcination step of heating the solids at a temperature higher than the temperature used in the drying step.

In a third aspect the present invention provides a carrier material for carrying active metal phases obtainable by the process of the second aspect.

In a fourth aspect the present invention provides a solid catalyst comprising: a carrier material according to the first aspect or according to the third aspect; and an alloy of metals in and or on the carrier material; the alloy comprising two or more metals chosen from Ni, Co, Sn, B, W and Mo. Preferably the catalyst comprises Ni and Co.

In a fifth aspect the present invention provides a process for making a solid catalyst, comprising: an impregnation step of impregnating a carrier material with a salt of nickel nitrate and a salt of cobalt; a drying step; and an activation step of heating the dried material in an atmosphere containing hydrogen at a temperature of from 400 to 1500 K.

In a sixth aspect the present invention provides a solid catalyst obtainable by the process of the fifth aspect.

In a seventh aspect the present invention provides a process for making syngas, comprising contacting a gas mixture containing methane and carbon dioxide with a solid catalyst at a temperature of 800 to 1400 K and a pressure of 0.5 to 20 bar; wherein the gas mixture contains methane and carbon dioxide in an average volume ratio of 0.3 : 1 to 2.5 : 1.

In an eighth aspect the present invention provides for the use of carrier materials of the present invention in making catalysts.

In a ninth aspect the present invention provides for the use of catalysts of the present invention in any process. Preferably the process is the production of syngas.

Any one or more of the aspects of the present invention may be combined with any one or more of the other aspects of the present invention. Similarly, any one or more of the features and optional features of any of the aspects may be applied to any one of the other aspects. Thus, the discussion herein of optional and preferred features may apply to some or all of the aspects. In particular, optional and preferred features relating to the carrier or catalyst, methods of making the carrier or catalyst and methods of using the carrier or catalyst, etc apply to all of the other aspects. Furthermore, optional and preferred features associated with a method or use may also apply to a product (e.g. carrier or catalyst) and vice versa.

The options, features, preferences and so on mentioned herein apply both independently and in any combination, except where such a combination is expressly prohibited or clearly impermissible.

*Carrier*

The carrier of the present invention is a mixed metal oxide. Suitably it has a high specific surface area. Suitably it has a high porosity. Suitably it has a durable internal structure. The carrier material described herein preferably exhibits good bonding properties with deposited metal catalysts.

The carriers described herein may enable on-going or dynamic adjustment of the catalyst operation to the changes in the composition of the feed stream (fluctuation of the content of $CH_4$, $CO_2$ and moisture).

The carrier material may be a compound of formula $Ce_xZr_{1-x}O_{2-y}$ wherein x is greater than 0 and less than 1 and y is from 0 to 1.

The carrier may be a homogenous solid solution of $Ce_xZr_{1-x}O_{2-y}$.

The carrier may be nanocrystalline.

The carrier suitably has a face-centred cubic unit cell crystalline structure.

The carrier material may comprise a homogenous solid solution of $Ce_xZr_{1-x}O_{2-y}$ having a face-centred cubic unit cell crystalline structure; wherein x is greater than 0 and less than 1 and y is from 0 to 1 and wherein x is not 0.5.

The carrier material may comprise a non-stoichiometric homogenous solid solution of $Ce_xZr_{1-x}O_{2-y}$ having a face-centred cubic unit cell crystalline structure; wherein x is greater than 0 and less than 1 and y is from 0 to 1.

The carrier material may suitably have a high mobility of oxygen in its crystal cage.

In the formula $Ce_xZr_{1-x}O_{2-y}$ the formula may be non-stoichiometric. X may be greater than 0.5. In some embodiments X is from about 0.6 and 0.9, for example X may be from about 0.75 and 0.95, for example X may be about 0.8. In some embodiments Y is from 0 and 1, for example Y may be from 0 to about 0.5, for example Y may be from 0 to about 0.2, for example Y may be 0.

Suitably the carrier exhibits a well-developed internal structure. For example, the carrier may have high porosity.

The porosity of the carrier may be at least 0.1 $cm^3$/g. Preferably it is at least 0.12 $cm^3$/g. Preferably it is at least 0.14 $cm^3$/g. Preferably it is at least 0.16 $cm^3$/g.

The porosity of the carrier may be not more than 0.3 $cm^3$/g. Preferably it is not more than 0.26 $cm^3$/g, for example not more than 0.25 $cm^3$/g.

The porosity of the carrier may be from 0.1 to 0.3 $cm^3$/g. It may be from 0.12 to 0.3 $cm^3$/g. It may be from 0.14 to 0.3 $cm^3$/g. It may be from 0.16 to 0.3 $cm^3$/g. It may be from 0.1 to 0.26 $cm^3$/g. It may be from 0.12 to 0.26 $cm^3$/g. It may be from 0.14 to 0.26 $cm^3$/g. It may be from 0.16 to 0.26 $cm^3$/g.

The porosity may be measured using the standard $N_2$ physisorption method.

The carrier suitably has a high specific surface area.

The surface area of the carrier, determined using the BET method, may be at least 80 $m^2$/g. It may be at least 90 $m^2$/g. It may be at least 100 $m^2$/G. It may be at least 120 $m^2$/g.

The BET specific surface area may be measured using the standard $N_2$ - physisorption method.

Brunauer-Emmett-Teller (BET) theory aims to explain the physical adsorption of gas molecules on a solid surface and serves as the basis for an important analysis technique for the measurement of the specific surface area of a material. For a more detailed description of the theory and method see S. Brunauer, P. H. Emmett, E. Teller, J. Am. Chem. Soc., 60 (1938), 309-319. The readings depend upon the surface area of the sample, which is available for surface monolayer $N_2$ adsorption.

The surface area of the carrier, determined using the BET method, may be equal to or less than 200 $m^2$/g, for

example equal to or less than 150 $m^2/g$, for example equal to or less than 145 $m^2/g$, for example equal to or less than 140 $m^2/g$, for example equal to or less than 130 $m^2/g$.

The surface area of the carrier, determined using the BET method, may be from about 80 $m^2/g$ to about 200 $m^2/g$. It may be from about 80 $m^2/g$ to about 150 $m^2/g$. It may be from about 80 $m^2/g$ to about 145 $m^2/g$. It may be from about 80 $m^2/g$ to about 140 $m^2/g$. It may be from about 80 $m^2/g$ to about 130 $m^2/g$. It may be from about 90 $m^2/g$ to about 200 $m^2/g$. It may be from about 90 $m^2/g$ to about 150 $m^2/g$. It may be from about 90 $m^2/g$ to about 145 $m^2/g$. It may be from about 90 $m^2/g$ to about 140 $m^2/g$. It may be from about 90 $m^2/g$ to about 130 $m^2/g$. It may be from about 100 $m^2/g$ to about 200 $m^2/g$. It may be from about 100 $m^2/g$ to about 150 $m^2/g$. It may be from about 100 $m^2/g$ to about 145 $m^2/g$. It may be from about 100 $m^2/g$ to about 140 $m^2/g$. It may be from about 100 $m^2/g$ to about 130 $m^2/g$. It may be from about 120 $m^2/g$ to about 200 $m^2/g$. It may be from about 120 $m^2/g$ to about 150 $m^2/g$. It may be from about 120 $m^2/g$ to about 145 $m^2/g$. It may be from about 120 $m^2/g$ to about 140 $m^2/g$. It may be from about 120 $m^2/g$ to about 130 $m^2/g$.

The average pore diameter of the carrier may be from about 3 to about 15 nm. It may be from about 5 to about 10 nm. It may be from about 5 to about 8 nm. It may be from about 8 to about 12 nm.

The average pore diameter may be calculated from the measurements obtained using the standard $N_2$ physisorption method.

The carrier material preferably shows a high mobility of oxygen in its crystal cage. For example the carrier material may exhibit at least 50 % reducibility of $Ce^{4+}$ ions into $Ce^{3+}$ ions within the temperature limits from 373 to 1173 K. For example, the carrier material may exhibit at least 70 % reducibility of $Ce^{4+}$ ions into $Ce^{3+}$ ions within the temperature limits from 373 to 1173 K.

This enables the catalyst an on-going or dynamic adaptation to changes in the composition of the feed stream such as fluctuation of the content of $CH_4$ and moisture.

The carrier material of the present invention may be used in the production of a catalyst.

*Carrier manufacture*

The present invention relates to a process for making a carrier material for carrying active metal phases, comprising: a solution formation step of preparing a supersaturated solution of a salt of cerium and a salt of zirconium and adding that solution to an organic solvent to form a precursor solution; a crystal formation step of forming suspended solids in the precursor solution; and a collection step of separating the suspended solids from the precursor solution.

In some embodiments the solution formation step involves dissolving a salt of cerium and a salt of zirconium in water. Preferably the water is close to its boiling point. This eases formation of a super saturated solution.

Separate solutions of the cerium salt and the zirconium salt may be formed.

In some embodiments the salt of cerium used is cerium nitrate.

In some embodiments the salt of zirconium used is zirconium nitrate.

The solution(s) are then added to an organic solvent. This is preferably accompanied by fast mixing of the mixture. The organic solvent may be chosen from polyols, low molecular weight organic acids with one to five carbon atoms, mono- esters of polyols, di-esters of polyols, mono-esters of low molecular weight organic acids with one to five carbon atoms, di-esters of low molecular weight organic acids with one to five carbon atoms, and combinations thereof.

Where both a polyol and a mono-or di-ester of a polyol are included in the organic solvent, the polyol may be the same polyol as that which is derivatised to form the mono-or di-ester.

Similarly, where both a low molecular weight organic acids with one to five carbon atoms and a mono-or di-ester of a low molecular weight organic acids with one to five carbon atoms are included in the organic solvent, the low molecular weight organic acids with one to five carbon atoms may be the same low molecular weight organic acids with one to five carbon atoms as that which is derivatised to form the mono-or diester.

In some embodiments the organic solvent comprises one or more of ethylene glycol, propionic acid, mono-esters of ethylene glycol, di-esters of ethylene glycol, monoesters of propionic acid and di-esters of propionic acid.

The organic solvent may comprise mixtures of two or more of these solvents.

The organic solvent preferably contains at least one of the mono- and di-esters of ethylene glycol and propionic acid. In some embodiments the organic solvent contains both mono and di-esters of ethylene glycol and propionic acid. In some embodiments the organic solvent contains mono-esters of ethylene glycol and mono-esters of propionic acid. In some embodiments the organic solvent contains di-esters of ethylene glycol and di-esters of propionic acid. In some embodiments the organic solvent contains mono-esters of ethylene glycol, di-esters of ethylene glycol, mono-esters of propionic acid and di-esters of propionic acid.

The ratio of mono : di-ester may be from 0.1 : 2 to 2 : 0.1. It may be from 0.1 : 2 to 2 : 1. It may be from 0.1 : 2 to 2 : 1. It may be from 0.1 : 1 to 2 : 1. It may be from 1 : 2 to 2 : 1. It may be from 1 : 2 to 2 : 1. It may be from 1 : 1 to 2 : 1. Preferably the ratio of mono : di esters is about 1 : 1.

The concentration of monoester used may be from 0.15 to 0.6 mol/L. It may be from 0.2 to 0.6 mol/L. It may be from 0.3 to 0.6 mol/L. It may be from 0.4 to 0.6 mol/L. It may be from 0.5 to 0.6 mol/L. It may be from 0.15 to 0.5 mol/L. It may be from 0.2 to 0.5 mol/L. It may be from 0.3 to 0.5 mol/L. It may be from 0.4 to 0.5 mol/L. It may be from 0.15 to 0.4 mol/L. It may be from 0.2 to 0.4 mol/L. It may be from 0.3 to 0.4 mol/L. It may be from 0.15 to 0.3 mol/L. It may be from 0.2 to 0.3 mol/L. It may be from 0.15 to 0.2 mol/L.

The concentration of diester use may be from 0.08 to 0.3 mol/L. It may be from 0.08 to 0.25 mol/L. It may be from 0.08 to 0.20 mol/L. It may be from 0.08 to 0.15 mol/L. It may be from 0.08 to 0.10 mol/L. It may be from 0.10 to 0.3 mol/L. It may be from 0.10 to 0.25 mol/L. It may be from 0.1 to 0.20 mol/L. It may be from 0.1 to 0.15 mol/L. It may be from 0.15 to 0.30 mol/L. It may be from 0.15 to 0.25 mol/L. It may be from 0.15 to 0.20 mol/L. It may be from 0.20 to 0.3 mol/L. It may be from 0.20 to 0.25 mol/L. It may be from 0.25 to 0.30 mol/L.

The inclusion of at least one of the mono- and di-esters of, for example, ethylene glycol and propionic acid is important as they can help produce the necessary structural features of the carriers of the present invention.

The overall ethylene glycol : water ratio upon addition of the Ce/Zr solutions is preferably from 9:1 to 2:1. It may be from 9:1 to 4:1. It may be from 9:1 to 6:1. It may be from 9:1 to 8:1. It may be from 8:1 to 6:1. It may be from 8:1 to 4:1. It may be from 8:1 to 2:1. It may be from 6:1 to 4:1. It may be from 6:1 to 2:1. It may be from 4:1 to 2:1.

The ratio of water : ethylene glycol is important as it can help impart the desired characteristic structure of the carriers of the present invention.

In one embodiment the organic solvent is a mixture of ethylene glycol, propionic acid and mono- and di-esters of ethylene glycol and propionic acid. Preferably the ratio of ethylene glycol : propionic acid : monoesters : di-esters is 220 : 5.5 : 4 : 4.

The overall ethylene glycol : metal ions molar ratio may be from 350 : 1 to 100 : 1. It may be from 300:1 to 100:1. It may be from 250:1 to 100:1. It may be from 240:1 to 100:1. It may be from 230:1 to 100:1. It may be from 350:1 to 150:1. It may be from 350:1 to 200:1. It may be from 350:1 to 210:1. It may be from 300:1 to 150:1. It may be from 250:1 to 150:1. It may be from 240:1 to 150:1. It may be from 230:1 to 150:1. It may be from 300:1 to 200:1. It may be from 250:1 to 200:1. It may be from 240:1 to 200:1. It may be from 230:1 to 200:1. It may be from 300:1 to 210:1. It may be from 250:1 to 210:1. It may be from 240:1 to 210:1. It may be from 230:1 to 210:1.

The crystal formation step may comprise aging. It may be aged such that the precursor solution is held under conditions such that seed crystals begin to form. It may be aged by heating. Aging may be performed in an autoclave. The aging may be carried out at a temperature from about 300 to about 500 K, for example from about 350 to about 470 K, for example from about 400 to about 450 K, for example from about 413 to about 443 K.

The aging may be carried out for from about 1 to about 20 hours, for example from about 2 to about 15 hours, for example from about 3 to about 10 hours, for example from about 5 to about 8 hours.

In some embodiments the collection step is carried out by centrifugation of the precursor solution. In other embodiments it may be carried out by filtration. It may be that a gel is formed in the crystal formation step. If so, it may be diluted with a solvent before filtration. The solvent used can be any suitable solvent, preferably an organic solvent for example, but not limited to, ethanol. It may be that a large volume of solvent is used.

The process optionally further comprises, after the collection step, a drying step of heating the separated solids. The process optionally further comprises, after the collection step, a calcination step of heating the solids. If the drying and calcination steps are both present, the calcination step follows the drying step. In some embodiments, the calcination step is carried out at a temperature higher than the temperature used in the drying step.

The drying step may be performed to remove solvent from the separated solids. It may be performed by heating the separated solids. The drying step may be carried out at a temperature from about 250 to about 500 K, for example from about 300 to about 450 K, for example from about 320 to about 370 K, for example from about 330 to about 350 K, for example about 343 K.

The drying step may be carried out for 1 to 24 hours, for example from 5 to 24 h, for example from 10 to 24 h, for example from 12 to 24 hours, for example from 15 to 24 hours, for example from 1 to 20 hours, for example from 5 to 20 hours, for example from 10 to 20 hours, for example from 15 to 20 hours, for example from 1 to 17 hours, for example from 5 to 17 hours, for example from 10 to 17 hours, for example from 15 to 17 hours. Preferably the drying step is carried out for about 16 h.

The calcination step may be carried out at a temperature of at least 400 K, for example at least 450 K, for example at least 500 K, for example at least 550 K, for example at least 573 K, for example at least 600 K, for example at least 650 K, for example at least 673 K. The calcination step may be carried out at a temperature less than 1000 K, for examples less than 900 K, for examples less than 800 K, for example less than 773 K.

The calcination step may be carried out at a temperature between 400 and 1000 K. It may be from 400 to 900 K. It may be from 400 to 800 K. It may be from 400 to 773 K. It may be from 450 to 1000 K. It may be from 450 to 900 K. It may be from 450 to 800 K. It may be from 450 to 773 K. It may be from 500 to 1000 K. It may be from 500 to 900 K. It may be from 500 to 800 K. It may be from 500 to 773 K. It may be from 550 to 1000 K. It may be from 550 to 900 K. It may be from 550 to 800 K. It may be from 550 to 773 K. It may be from 600 to 1000 K. It may be from 600 to 900 K. It may be from 600 to 800 K. It may be from 600 to 773 K. It may be from 650 to 1000 K. It may be from 650 to 900 K. It may be from 650 to 800 K. It may be from 650 to 773 K. It may be from 673 to 1000 K. It may be from 673 to 900 K. It may be from 673 to 800 K. It may be from 673 to 773 K.

The calcination step may be carried out for at least 1 hour, for example at least 2 hours, for example at least 3 hours, for example at least 4 hours.

The calcination step may be carried out with heating of the solids in a stream of dry air. The humidity of the air may be less than or equal to 20%, for example less than or equal to 10%, for example less than or equal to 5%. The humidity of the air may be 0%. The humidity of the air may be from 0 to about 20%, for example from 0 to about 10%, for example from 0 to about 5%.

The carrier material of the present invention may be used in the production of a catalyst.

*Catalyst*

The catalyst of the present invention (also referred to herein as a catalyst complex) has a number of advantages. Suitably it has a high specific surface area. Suitably it has a high porosity. Suitably it is durable. Suitably it is resistant to coke accumulation on its surface. Suitably it has a high catalytic activity and selectivity. Suitably its catalytic performance is not significantly decreased over time.

Low loading of the active component enables high dispersion and uniform distribution of the active metals on the carrier.

The catalyst of the present invention is multifunctional, because the activation of individual reactants takes place on separate active sites. The activation of methane takes place on the surface of, for example, bimetallic nanoparticles and the activation of carbon dioxide on the surface of, for example, a homogeneous solid solution of a mixed metal oxide carrier. By maintaining a suitable size and distribution of active particles, it can be assured that the steps of dissociative adsorption and activation of either methane or carbon dioxide on different active sites are balanced. This can result in negligible deposition of carbon on the catalyst surface during the use in the process.

The catalyst of the present invention is suitably extremely effective for converting real gas mixtures of methane and carbon dioxide. The carriers described herein enable on-going or dynamic adjustment of the catalyst operation to the changes in the composition of the feed stream (fluctuation of the content of $CH_4$, $CO_2$ and moisture).

The catalyst complex of the present invention suitably has a much lower (for example, up to three orders of magnitude; $x10^3$) selectivity for accumulating carbon, resulting in a longer life of the catalyst before regeneration is required. This also allows for regeneration to be more effective as less carbon is deposited that requires removing resulting in far less residual carbon after regeneration.

The catalyst complex of the present invention also suitably effectively converts a wide range of carbon dioxide and methane based feed streams into syngas.

The catalyst may be a solid catalyst comprising: a carrier material as described herein; and an alloy of metals in and or on the carrier material; the alloy may comprise two or more metals chosen from Ni, Co, Sn, B, W and Mo. Preferably the catalyst comprises Ni and Co.

The alloy may be in the form of bimetallic nanoparticles. The alloy may include other elements than Ni, Co, Sn, B, W and Mo. The alloy may be deposited on the carrier. It may additionally or alternatively be impregnated in pores of the carrier.

The catalyst complex of the present invention may have at least two active metal phases. The active metals form an alloy on the carrier.

The total metal loading may be from about 1 to about 3 wt%, for example from about 1 to about 2.5 wt%, for example from about 1.5 to about 2.5 wt%. The total metal loading may be less than about 3 wt%, for example less than about 2.9 wt%, for example less than about 2.8 wt%, for example less than about 2.7 wt%, for example less than about 2.6 wt%. The total metal loading mater be about 2.5 or less, for example about 2.5 wt%. The wt% is measured by weight of the catalyst complex as a whole, that is, including the carrier material.

In some embodiments the metals chosen include nickel (Ni) and cobalt (Co). The weight ratio of nickel : cobalt may be from about 0.3 : 1 to about 2.5 : 1; for example from about 0.4 : 1 to about 2.3 : 1; for example from about 0.5 : 1 to about 2 : 1; for example from about 0.7: 1 to about 1.5 : 1.

The catalyst may be in powder form. The catalyst may be in shaped form.

The surface area of the catalyst, determined using the BET method, may be at least 10 $m^2$/g. It may be at least 15 $m^2$/g. It may be at least 20 $m^2$/g. It may be at least 30 $m^2$/g.

The BET specific surface area may be measured using the standard $N_2$ - physisorption method.

The surface area of the catalyst, determined using the BET method, may be equal to or less than 100 $m^2$/g, for example equal to or less than 80 $m^2$/g, for example equal to or less than 50 $m^2$/g, for example equal to or less than 40 $m^2$/g.

The surface area of the carrier, determined using the BET method, may be from about 10 $m^2$/g to about 100 $m^2$/g. It may be from about 10 $m^2$/g to about 80 $m^2$/g. It may be from about 10 $m^2$/g to about 50 $m^2$/g. It may be from about 10 $m^2$/g to about 40 $m^2$/g. It may be from about 15 $m^2$/g to about 100 $m^2$/g. It may be from about 15 $m^2$/g to about

80 m$^2$/g. It may be from about 15 m$^2$/g to about 50 m$^2$/g. It may be from about 15 m$^2$/g to about 40 m$^2$/g. It may be from about 20 m$^2$/g to about 100 m$^2$/g. It may be from about 20 m$^2$/g to about 80 m$^2$/g. It may be from about 20 m$^2$/g to about 50 m$^2$/g. It may be from about 20 m$^2$/g to about 40 m$^2$/g. It may be from about 30 m$^2$/g to about 100 m$^2$/g. It may be from about 30 m$^2$/g to about 80 m$^2$/g. It may be from about 30 m$^2$/g to about 50 m$^2$/g. It may be from about 30 m$^2$/g to about 40 m$^2$/g.

The resulting catalyst of the present invention is extremely effective for converting real gas mixtures of methane and carbon dioxide.

The catalyst of the present invention may be used to catalyse a process. Preferably the process to be catalysed is the production of syngas.

*Catalyst manufacture*

The present invention relates to a process for making a solid catalyst, comprising: an impregnation step of impregnating a carrier material with a source of two or metals chosen from Ni, Co, Sn, B, W and Mo; a drying step; and an activation step of heating the dried material in an atmosphere containing hydrogen.

The process for making a solid catalyst of the present invention may comprise any of the methods for producing carrier materials of the present invention as outlined above.

The source of metal may be a metal salt.

The impregnation step may involve homogenous impregnation. In some embodiments it may be carried out by temperature-programmed hydrolysis of urea.

For example, temperature programmed hydrolysis of urea may be performed by adding urea to the suspension of mixed oxide carrier and solution of one or more metal precursors and heating to 363K. During heating, urea is slowly decomposed to $CO_2$ gas and $NH^{4+}$ ions, which causes pH of the suspension to increase and results in slow and homogeneous deposition of the one or more metal active phases onto the carrier. The impregnation step may involve simultaneous impregnation with the source of two or more metals for example as a single mixture. Alternatively, the sources may be impregnated separately or sequentially.

In one embodiment the alloy comprises Ni and Co. The source of Ni may be a Ni salt, for example the Ni salt may be nickel nitrate. The source of Co may be Co salt, for example the Co salt may be cobalt nitrate. The impregnation step may involve simultaneous impregnation with the source of nickel and the source of cobalt, for example as a single mixture. Alternatively, the sources may be impregnated separately or sequentially.

The drying step is suitably carried out at room temperature or above. It may involve heating the impregnated carrier material. The drying step may be carried out at a temperature from about 250 to about 500 K, for example from about 300 to about 450 K, for example from about 320 to about 370 K, for example from about 330 to about 350 K, for example about 343 K.

The activation step may be carried out at a temperature higher than that used in the drying step. The activation step may be carried out at a temperature from about 400 to about 1500 K, for example from about 500 to about 1400 K, for example from about 600 to about 1300 K, for example from about 700 to about 1200 K, for example from about 800 to about 1100 K, for example from about 950 to about 1050 K, for example about 1023 K.

The activation step may be carried out for from about 0.5 hours to about 2 hours, for example about 1 hour.

The atmosphere used in the activation step contains hydrogen ($H_2$). It may be a diluted hydrogen atmosphere. The hydrogen content may be from about 10 vol% to about 40 vol%, for example from about 15 vol% to about 30 vol%, for example about 20 vol%, for example 20 vol%. The atmosphere containing hydrogen may be made to flow over the dried impregnated carrier material.

The atmosphere used in the activation step may contain inert gas in addition to hydrogen. For example it may contain nitrogen ($N_2$). In some embodiments, the atmosphere used in the activation step contains only hydrogen and nitrogen.

The atmosphere containing hydrogen may be made to flow over the dried impregnated carried material. Methods of making such gas flow are known in the art. The flow rate may be from about 10 to about 100 NmL/min; for example from about 20 to about 80 NmL/min; for example from about 30 to about 70 NmL/min; for example from about 40 to about 60 NML/min; for example about 50 NmL/min

The process for making a solid catalyst according to the present invention may in some embodiments further include a calcination step, between the drying step and the activation step, of calcining the dried material at a temperature of from about 700 to about 1300 K. The temperature may be from about 750 to about 1250 K, for example from about 800 to about 1150 K, for example from about 823 to about 1123 K, for example from about 900 to about 1000 K, for example from about 915 to about 950 K. The temperature may be, for example, about 823 K, or about 923 K, or about 1023 K.

The calcination step may be carried out for 1 to 10 hours. For example from 1 to 9 hours. For example from 1 to 8 hours. For example from 1 to 7 hours. For example from 1 to 6 hours. For example from 1 to 5 hours. For example from 1 to 4 hours. For example from 1 to 3 hours. For example from 1 to 2 hours. For example from 2 to 9 hours. For example from 2 to 8 hours. For example from 2 to 7 hours. For example from 2 to 6 hours. For example from 2 to 5 hours. For example from 2 to 4 hours. For example from 2 to 3 hours. For example from 3 to 9 hours. For example from 3 to 8 hours. For example from 3 to 7 hours. For example from 3 to 6 hours. For example from 3 to 5 hours. For example from 3 to 4 hours. For example from 4 to 9 hours. For example from 4 to 8 hours. For example from 4 to 7 hours. For example from 4 to 6 hours. For example from 4 to 5 hours. For example from 5 to 9 hours. For example from 5 to 8 hours. For example from 5 to 7 hours. For example from 5 to 6 hours. For example from 6 to 9 hours. For example from 6 to 8 hours. For example from 6 to 7 hours. For example from 7 to 9 hours. For example from 7 to 8 hours. For example from 8 to 9 hours. Preferably the calcination step is performed for about 3 hours, for example 3 hours.

When a calcination step is present, the atmosphere used for the calcination step may be different from the atmosphere used for the activation step. The atmosphere used for the activation step may include more hydrogen than is present in the atmosphere used in the calcination step.

The catalyst of the present invention may be used to catalyse a process. Preferably the process to be catalysed is the production of syngas.

*Syngas formation process*

Syngas is well known in the art. It is a gas primarily containing hydrogen and carbon monoxide, and often includes some carbon dioxide as well.

The present invention relates to a process for making syngas, comprising contacting a gas mixture containing methane and carbon dioxide with a solid catalyst at a temperature of 800 to 1400 K and a pressure of 0.5 to 20 bar; wherein the gas mixture contains methane and carbon dioxide in an average volume ratio of 0.3 : 1 to 2.5 : 1.

The gas mixture may be made to flow over the solid catalyst.

The gas mixture (also referred to as feedstock herein) may come from any source.

The conversion of gas mixtures into syngas is an appealing way of using methane and excess carbon dioxide from the processes of anaerobic microbial degradation of biodegradable organic substances (e.g. waste from food industry, household waste, livestock manure and agricultural waste), catalytic decarboxylation of wastewaters (e.g. wastewaters from paper, leather, textile and polymer industry) and some types of gasification of biomass and coal.

As a substitute for suitable gas mixtures from renewable sources, methane from fossil origin, to which carbon dioxide sourced from thermal power plants, industrial fermentation procedures and similar sources is added, can also be used as feedstock. This way, the proposed invention enables the capture and energy-efficient integration of production emissions of carbon dioxide into syngas, which reflects in an overall low-carbon balance of the process.

In industrial processes with excess waste heat, the heat can be used for pre-heating mixtures of reactants and performing the catalytic process, which decreases the energy input during the reaction and increases the total efficiency of the process of catalytic dry reforming of methane.

The current process for converting dry or moist mixtures of methane and carbon dioxide into syngas is technologically relatively undemanding, since it eliminates the need for carbon dioxide separation, does not require additional set-up of a water vaporizer unit and complex technical equipment for temperature control.

The present process for making syngas includes contacting a gas mixture containing methane and carbon dioxide on a solid catalyst.

In some embodiments, the temperature used is from about 800 to about 1400 K; for example from about 850 to about 1300 K; for example from about 900 to about 1200 K, for example from about 973 to about 1173 K, for example from about 1000 to about 1100 K, for example from about 1015 to about 1050 K, for example about 1023 K.

In some embodiments, the operating pressure is from about 0.5 to about 20 bar, for example from about 1 to about 10 bar, for example from about 1.1 to about 5 bar, for example about 1.2 bar.

In some embodiments, the gas mixture is composed of an existing or prepared gas mixture of methane and carbon dioxide. The average volume ratio of methane : carbon dioxide in the gas mixture may be from about 0.3 : 1 to about 2.5 : 1, for example from about 0.4 : 1 to about 2.3 : 1, for example from about 0.7 : 1 to about 1.7 : 1; for example from about 0.8 : 1 to about 1.2 : 1. The average volume ratio of methane : carbon dioxide may be, for example, about 1 : 1, or for example about 1.5 : 1; or for example about 2.3 : 1.

The gas mixture or introduced stream may be dry or may contain a certain amount of water. The water content may be in the range from 0 to 100 % of relative humidity. Good redox properties enable catalysts of the present invention an on-going or dynamic adaptation to changes in the composition of the feed stream (fluctuation of the content of $CH_4$ and moisture).

The gas mixture containing methane and carbon dioxide may be made to flow over the solid catalyst. Methods of making such gas flow are known in the art. The flow rate may be from about 50 to about 200 NmL/min; for example from about 70 to about 150 NmL/min; for example from about 80 to about 120 NmL/min; for example from about 00 to about 110 NmL/min; for example about 100 NmL/min.

The process of making syngas described herein may be carried out in a two-phase reactor system.

The catalyst of the present invention enables stable functioning of the process with good activity for the conversion of methane and carbon dioxide into syngas and extremely low selectivity for forming inactive carbon with consequently a low level of coke accumulation on the surface of the catalysts.

The present invention can be used for improving the energy value of the introduced gaseous mixtures or for producing quality raw material (syngas) for the production of fuel, fuel additives and other chemicals from renewable sources. The process is efficient both at the optimal composition of the feed and in the case of non-optimal ratio between methane and carbon dioxide.

Throughout this specification, including the claims which follow, unless the context requires otherwise, the word "comprise" and variations such as "comprises" and "comprising," will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Thus, for example, reference to "a collection step" includes combinations of two or more such collection steps, and the like.

Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment.

This disclosure includes information that may be useful in understanding the present invention. It is not an admission that any of the information provided herein is prior art or relevant to the presently claimed invention, or that any publication specifically or implicitly referenced is prior art.

**Brief Description of the Figures**

**Figure 1:** TEM micrograph of a $3NiCo/Ce_{0.8}Zr_{0.2}O_2$ catalyst prior to methane dry reforming experiments. Arrows highlight deposited nickel-cobalt particles.

**Figure 2:** Comparison of XRD diffractograms belonging to $3NiCo/ Ce_{0.8}Zr_{0.2}O_2$ catalysts after different times on stream: a) 0 h, b) 30 h and c) after 400 h. The asterisk and circle symbols represent the expected diffraction maximum locations for metallic nickel and cobalt phases (PDF 01-089-7128 and PDF 00-15-0727).

**Figure 3:** H2-TPR profiles of a) a $Ce_{0.8}Zr_{0.2}O_2$ solid solution before NiCo deposition, b) a $3NiCo/ Ce_{0.8}Zr_{0.2}O_2$ catalyst at 0 h TOS, c) a $3NiCo/ Ce_{0.8}Zr_{0.2}O_2$ catalyst at 30 h TOS and d) a $3NiCo/ Ce_{0.8}Zr_{0.2}O_2$ catalyst at 400 h TOS.

**Figure 4:** a) Methane and $CO_2$ conversions as a function of time on stream with b) concentration profiles of reaction products and unconverted reactants for a $3NiCo/ Ce_{0.8}Zr_{0.2}O_2$ catalyst and a feed stream having a $CH_4/CO_2$ ratio of 1.

**Figure 5:** a) Methane and $CO_2$ conversions as a function of time on stream with b) concentration profiles of reaction products and unconverted reactants for a $3NiCo/ Ce_{0.8}Zr_{0.2}O_2$ catalyst and a feed stream having a $CH_4/CO2$ ratio of 1.5.

**Figure 6:** a) Methane and $CO_2$ conversions as a function of time on stream with b) concentration profiles of reaction products and unconverted reactants for a $3NiCo/ Ce_{0.8}Zr_{0.2}O_2$ catalyst and a feed stream having a $CH_4/CO_2$ ratio of 2.33.

**Figure 7:** Morphology change of a $3NiCo/ Ce_{0.8}Zr_{0.2}O_2$ catalyst during a $CH_4$-$CO_2$ reforming test after: a) 0 h, b) 30 h and c) 400 h TOS.

**Figure 8:** TEM-EDX analysis of 3NiCo EG catalysts at different times on stream: a) 0 h, b) 30 h and c) 400 h. Concentration profiles of nickel and cobalt in a line TEM-EDX analysis of bimetallic particles are presented for: d) 30 h TOS and e) 400 h TOS.

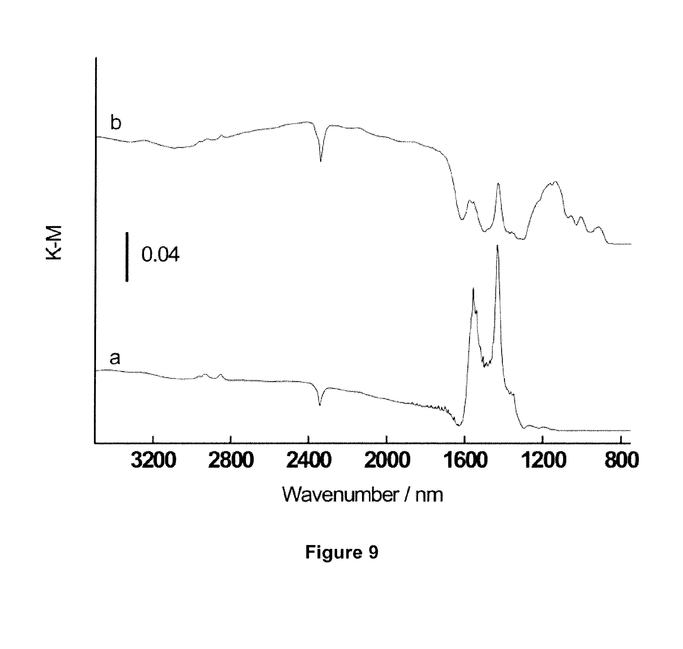

**Figure 9:** FTIR DRIFTS spectra of a $3NiCo/ Ce_{0.8}Zr_{0.2}O_2$ catalyst after: a) 30 and b) 400 h TOS.

**Figure 10:** Raman spectra of a $3NiCo/ Ce_{0.8}Zr_{0.2}O_2$ catalyst calcined at 923 K, after 0, 30 and 400 h TOS during reforming of equimolar $CH_4/CO_2$ model biogas stream at 1023 K.

**Figure 11:** UV-Vis DR spectra of a) $Ce_{0.8}Zr_{0.2}O_2$ and 3NiCo/ $Ce_{0.8}Zr_{0.2}O_2$ catalysts after b) 0 h, c) 30 h and d) 400 h TOS.

**Figure 12:** The conversion of methane and carbon dioxide as a function of time on stream measured in the reactor in the presence of (a) a non-calcined NIC-2 catalyst and NIC-1 catalysts calcined at (b) 823 and (c) 1123 K at 150-hour operation of the reactor and (d) calcined at 923 K at 400-hour operation of the reactor. Operation conditions are equal in all the presented tests.

**Figure 13:** a) Methane and $CO_2$ conversions as a function of time on stream with b) concentration profiles of reaction products and unconverted reactants for the 3NiCo/$Ce_{0.8}Zr_{0.2}O_2$ catalyst calcined at 550 °C and feed stream comprising $CH_4/CO_2$ ratio of 1.

**Figure 14:** a) Methane and $CO_2$ conversions as a function of time on stream with b) concentration profiles of reaction products and unconverted reactants for the 3NiCo/$Ce_{0.8}Zr_{0.2}O_2$ catalyst calcined at 750 °C and feed stream comprising $CH_4/CO_2$ ratio of 1.

**Figure 15:** a) Methane and $CO_2$ conversions as a function of time on stream with b) concentration profiles of reaction products and unconverted reactants for the 3NiCo/$Ce_{0.8}Zr_{0.2}O_2$ catalyst calcined at 850 °C and feed stream comprising $CH_4/CO_2$ ratio of 1.

**Examples**

The purpose of the following examples is to illustrate modes of carrying out the present invention.

**Example 1: Preparation of the Catalysts**

Example $Ni/Co$-$Ce_xZr_{1-x}O_{2-y}$ catalysts that are the subject of this invention have been prepared in the following way:

The carrier material was produced by preparing supersaturated solutions of both cerium nitrate and zirconium nitrate. The molar ratio of Ce : Zr is 2.9 : 1

The supersaturated solutions were then added to a mixture of ethylene glycol, propionic acid and mono- and di-esters of ethylene glycol propionic acid in a molar ratio of 220 : 5.5 : 4 : 4 respectively. Further, the molar ratio of ethylene glycol : metal ions was 220 : 1.

The resulting solution was aged from 3 to 10 hours in an autoclave at T = 413 - 443 K and then the formed suspended solids were separated from the solution by centrifugation. This was then followed by drying at T = 343 K and then an additional four hours of heating of the resulting material in a stream of dry air at T = 573 - 673 K.

The catalyst complexes were prepared with homogeneous impregnation of the produced carrier material with a total of 2.5 wt% cobalt and nickel, with a Co : Ni weight ratio of 60 : 40. Uniform emplacement of the carrier, simultaneously with nickel and cobalt nitrate, was performed by means of temperature-programmed hydrolysis of urea. This was followed by drying at T = 343 K to give a dried gel.

Before use in the catalytic process, individual catalysts were prepared in two ways:

• NIC-1: The dried gel was heated for three hours in a stream of dry air at T = 823 - 1123 K. This stage is referred to as calcination in the following testing section. Examples were prepared with heating at 823K, 923K and 1023K respectively. The resulting solid was then activated by heating for one hour in a diluted hydrogen atmosphere, 20 vol. % with a total flow rate of 50 NmL/min at 1023 K to give an active catalyst complex.

• NIC-2: The dried gel was activated by heating in a diluted hydrogen atmosphere, 20 vol. % with a total flow rate of 50 NmL/min at 1023 K to give an active catalyst complex.

The powdered bimetallic catalysts $Ni/Co$-$Ce_xZr_{1-x}O_{2-y}$ (NIC-1 and NIC-2) produced using the above methods were independently tested in the process of catalytic conversion of methane and carbon dioxide into syngas.

**Example 2: Testing of Catalysts**

*Experimental method:*

Below we are presenting the results of the testing of catalysts with 2.5 wt. % active component, in some cases calcined at various temperatures. This mode of practicing demonstrates the effectiveness of the proposed invention using the example of a heterogeneously catalysed conversion of model biogas mixtures into syngas at long-term operation of a two-phase reactor.

The laboratory tests were performed in a vertical tubular fixed-bed reactor (internal diameter of 10 mm). The reaction conditions under which the process was performed are stated in Table 1.

In a characteristic test, we immobilised the catalyst in the centre of the reactor with two flocks of quartz wool. Precise control of the operating temperature was ensured by installing a thermocouple (K-type) into the centre of the catalyst's bed. Before the start of the reaction, the catalyst was reduced at 1023 K in a hydrogen atmosphere (20 vol. % $H_2$ v $N_2$) at total flow of 50 NmL/min. After activation, the feed was switched to $CH_4$ in $CO_2$, and the volume flow rate was increased accordingly. We followed the course of the process with an online analysis of the products of the gas phase with a gas chromatograph (Agilent Technologies, model 7890 A). The extent of carbon deposition on the catalyst was evaluated by using a CHNS analyser (Perkin Elmer, model CHNS Analyzer 2400 series II) that operates on the principle of a modified Pregl-Dumas method.

Table 1. Experimental conditions in catalytic conversion of methane and carbon dioxide.

| | |
|---|---|
| Reaction temperature, K | 1023 |
| Total pressure, bar | 1.2 |
| Total flow of gas phase, NmL/min | 100 |
| Catalyst mass, mg | 500 |
| Weight hourly space velocity (WHSV), NL/($g_{kat} \times$h) | 11 |

### Results:

Table 2 shows the yield of $H_2$, CO and $H_2O$ and the selectivity for carbon formation during conversion of dry biogas in the presence of the NIC1 catalyst calcined at 823, 923 and 1023 K and molar ratio $CH_4$ $CO_2$ = 1 : 1; 1.5 :1 and 2.3 : 1 in the feed stream.

| Calcination temperature, K | n($CH_4$) : n($CO_2$) ratio | Yield $H_2$, % | Yield CO, % | Yield $H_2O$, % | Selectivity C, % |
|---|---|---|---|---|---|
| non-calcined | 1 : 1 | 50 | 68 | 6.6 | $1.4 \times 10^{-3}$ |
| 823 | 1 : 1 | 50 | 68 | 6.6 | $1.9 \times 10^{-3}$ |
| 923 | 1 : 1 | 72 | 85 | 5.9 | $9.0 \times 10^{-5}$ |
| 1023 | 1 : 1 | 59 | 80 | 7.2 | $5.8 \times 10^{-4}$ |
| 923 | 1.5 : 1 | 49 | 68 | 2.7 | 0.010 |
| 923 | 2.3 : 1 | 36 | 56 | 0.7 | 0.016 |

It is clear from Table 2 that the catalyst of the present invention provides high conversion efficiency of model dry biogas mixtures of various compositions in the presence of catalysts exposed to various calcination temperatures. As is evident from the presented results, all catalysts show high selectivity for the production of hydrogen and carbon monoxide from the mixture of methane and carbon dioxide and low selectivity for accumulating non-active carbon on the surface of the catalyst.

The highest level of conversion of reactants and the lowest selectivity for coke accumulation on the catalyst's surface is achieved when using the NIC1 catalyst, calcined at 923 K, and when feeding the reactor with an equimolar mixture of methane and carbon dioxide (molar ratio $CH_4$ : $CO_2$ = 1 : 1). By providing excess concentration of methane in the dry feed stream, the selectivity for forming water as side product is decreased and thus it is possible to produce a syngas of higher quality (molar ratio $H_2$ : CO > 1.2 : 1).

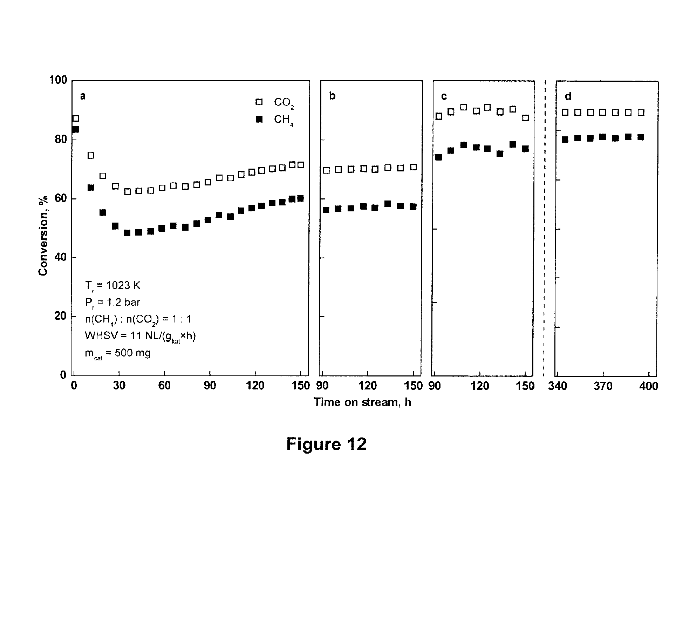

Figure 12 shows the conversion of methane as a function of time on stream determined in the continuous-flow tubular fixed-bed reactor in the presence of: (i) non-calcined NIC2 catalyst and (ii) NIC1 catalysts calcined at 823, 923 and 1023 K. As is evident, after a short period of operation the mentioned catalysts achieve constant conversion of both reactants and in the presented long-term performance test ($t_r$ = 150 - 400 hours) express a high efficiency for the conversion of methane and carbon dioxide in dry and moist gas mixtures of renewable and non-renewable origin.

These results demonstrate the effectiveness of the proposed invention using the example of a heterogeneously catalysed conversion of model biogas mixtures into syngas at long-term operation of a two-phase reactor.

In the performed tests, a gas mixture of methane and carbon dioxide fed through the fixed bed of catalysts of the present invention are effectively converted into syngas. The process is efficient both at the optimal composition of the feed and in the case of non-optimal ratio between methane and carbon dioxide.

The catalysts of the present invention have a significantly lower (up to three orders of magnitude; $\times 10^3$) selectivity for accumulating carbon than catalysts of the prior art. This high resistance to the accumulation of carbon, compared to known materials, is reflected in the stable functioning of the catalyst in the process, improved carbon balance of the conversion of reactants into syngas and if eventually needed enables highly effective regeneration of the catalyst under precisely controlled conditions for its reuse in the process.

Compared to a catalyst $Ni_a{}^{m+}Co_b{}^{n+}Al_c{}^{3+}Mg_d{}^{2+}O_x$ the present NIC1 and NIC2 catalysts (example 1) show a comparable conversion efficiency of the methane and carbon dioxide mixture in terms of high activity and good resistance of the material to coke accumulation. Compared to an irreducible spinel carrier, the proposed carrying material $Ce_xZr_{1-x}O_{2-y}$ exhibits superior redox properties (suitably 70 % of reducibility of $Ce^{4+}$ ions into $Ce^{3+}$ ions within the temperature limits from 373 to 1173 K), while the active metal on the proposed catalysts is reduced at significantly lower temperatures (reduction suitably from 523 to 773 K) than reference materials. Good redox properties enable the catalyst an on-going or dynamic adaptation to changes in the composition of the feed stream (fluctuation of the content of $CH_4$ and moisture).

## Example 3: Characterization and activity studies

### General experimental

$N_2$ sorption (Tristar II 3020 apparatus by Micromeritics) was employed for specific surface area and pore size/volume determination at $LN_2$ temperature. Prior to measurements, the samples were degassed by heating in nitrogen flow at 573 K for 6 h. Deposited carbon amount was quantified over fresh and spent catalysts using CHNS elemental analysis (2400 series II analyzer by Perkin Elmer). Temperature programmed reduction ($H_2$-TPR) examination was performed to determine the reduction behavior and oxygen storage capacity of prepared catalysts. AutoChem II 2920 apparatus by Micromeritics was used to perform the analysis. Prior to analysis, the samples were purged at 573 K in synthetic air for 60 min, followed by cooling to 318 K in Ar. After 15 min, the flow was changed to 5 % $H_2$/Ar and a linear temperature ramp of 10 K/min was employed until reaching the final temperature of 1073 K. SEM and TEM analyses were performed by Carl Zeiss SUPRA VP 35 field-emission scanning electron microscope with 1 kV accelerating voltage and JEOL JEM 2100F transmission electron microscope, respectively. The TEM instrument was equipped with Energy-dispersive X-ray spectroscopy hardware (Oxford instruments, model INCA x-sight). The samples were operated at 80 kV in the HRTEM mode and 200 kV accelerating voltage in EDX mapping mode. Prior to analysis, the materials were deposited on a copper grid-supported perforated transparent carbon foil. XRD characterization was performed on the PANalytical X'Pert PRO instrument in the 2 theta range between 10 and 80 degrees, step size of 0.017°, acquisition time at each step equal to 100 s and using Cu K$\alpha$1 radiation with a wavelength of 0.15406 nm.

UV-Vis spectroscopic characterization was performed using a Lambda 35 spectrophotometer by Perkin Elmer, equipped with a praying mantis accessory for measuring the powdered samples and SPECTRALONTM as the background. FTIR characterization of spent samples was performed with a Frontier apparatus by Perkin Elmer, equipped with a DifiusIR DRIFTS cell from Pike Scientific. A fresh $3NiCo/Ce_{0.8}Zr_{0.2}O_2$ catalyst was in situ reduced for 1 h at 1023 K in a 20 % $H_2/N_2$ flow, cooled to 378 K and used as the background spectrum. Spent catalyst samples were recorded after 1 h purging in $N_2$ flow at 378 K in the wavenumber range between 500 and 4000 cm$^{-1}$, 128 acquisitions per scan and 4 cm$^{-1}$ spectral resolution. Raman spectroscopy measurements were performed with a Renishaw inVia Raman microscope, equipped with a cooled CCD detector. The samples were excited with the 532 nm laser and the spectra were recorded with 10 s integration time and 4 cm$^{-1}$ resolution. Catalytic tests were performed using a Microactivity Reference reactor system (MARef from PID Eng&Tech) equipped with a tubular quartz reactor (I.D. = 10 mm). Prior to all catalytic tests, catalyst samples were reduced in situ using a 20 % $H_2/N_2$ gas mixture (50 NmL/min) by heating from RT to 1023 K with a 10 K/min ramp, followed by an isothermal step at 1023 K for 1 h. After catalyst activation, the atmosphere was changed to $CH_4$ and $CO_2$ with a flow rate of 50 NmL/min each. Absolute operating pressure was maintained at 1.2 bar during all tests. Catalyst bed comprised of 500 mg catalyst, diluted with 2850 mg of SiC sand (0.2-0.5 mm, BET surface area below 0.1 m$^2$/g), which was fixed between two quartz wool flocks (WHSV = 12 L/(gcat. h)). A K-type thermocouple (1/16 in. in diameter) was positioned inside the catalyst bed for accurate temperature control. Gases leaving the reactor were fed through a heated capillary (1/8 in. at 473 K) to the GC (7890A, Agilent Technologies). Quantitative and qualitative analysis of reactor outlet gas was determined using Poraplot Q and Molesieve 5A capillary columns. Blank experiment with the thermocouple, quartz wool and SiC sand at 1073 K reached $CH_4$ and $CO_2$ conversions below 1 %.

**Catalyst synthesis**

Catalysts were synthesized according to the following method for these characterization and activity studies. The $CeO_2$-$ZrO_2$ catalyst support (ratio of both oxides was equal to 80 and 20 wt. %, respectively) was synthesized from nitrate precursors, which were dissolved in ultrapure water and absolute ethanol. This solution was added to a mixture of ethylene glycol and propionic acid, which was transferred to PTFE-lined autoclaves, followed by aging for 200 minutes at 453 K. The obtained precipitate was separated from mother liquor by centrifugation, followed by washing with ultrapure water and absolute ethanol several times, drying overnight at 343 K and calcination for 4 h at 673 K in air. Homogeneous deposition-precipitation method was used for finely dispersing nickel and cobalt particles over the designated $Ce_{0.8}Zr_{0.2}O_2$ support. The total loading of deposited nickel and cobalt was 3 wt. % and the weight ratio between nickel and cobalt was equal to 40 and 60 %, respectively. Catalysts were calcined in air at 823, 923, 1023 and 1123 K for 4 h.

**Studies:**

*Catalyst structure*

ICP-OES characterization revealed 1.06 and 1.51 wt. % of nickel and cobalt present in the synthesized catalyst sample, which corresponds closely to the nominal active metal weight ratio. Specific BET surface area of the synthesized $3NiCo/Ce_{0.8}Zr_{0.2}O_2$ catalyst was 38.1 $m^2/g$ (Table3).

**Table 3.** BET specific surface area, total pore volume, average pore diameter, active metal surface area, accumulated carbon amount, active bimetallic particle size and OSC for $3NiCo/Ce_{0.8}Zr_{0.2}O_2$ catalyst at different times on stream.

| Time on stream h | BET surface area, $m^2/g$ | Total pore volume, $cm^3/g$ | Average pore diameter, nm | NiCo surface area, $m^2/g$ | Accumulated carbon, wt.% | NiCo bimetallic particle size, nm | OSC, mmol O/g $Ce_{0.8}Zr_{0.2}O_2$ |
|---|---|---|---|---|---|---|---|
| 0 | 38.1 | 0.171 | 17.9 | 1.71 | 0.24 | 5.9 | 0.99 |
| 30 | 26.7 | 0.163 | 24.3 | 0.54 | 0.34 | 18.5 | 0.56 |
| 400 | 19.8 | 0.149 | 27.6 | 0.15 | 0.23 | 46.0 | 0.58 |

This value is substantial lower compared to the bare carrier $Ce_{0.8}Zr_{0.2}O_2$ support (120.9 $m^2/g$) and identifies substantial structural modifications taking place during deposition of nickel and cobalt and subsequent calcination/activation process.

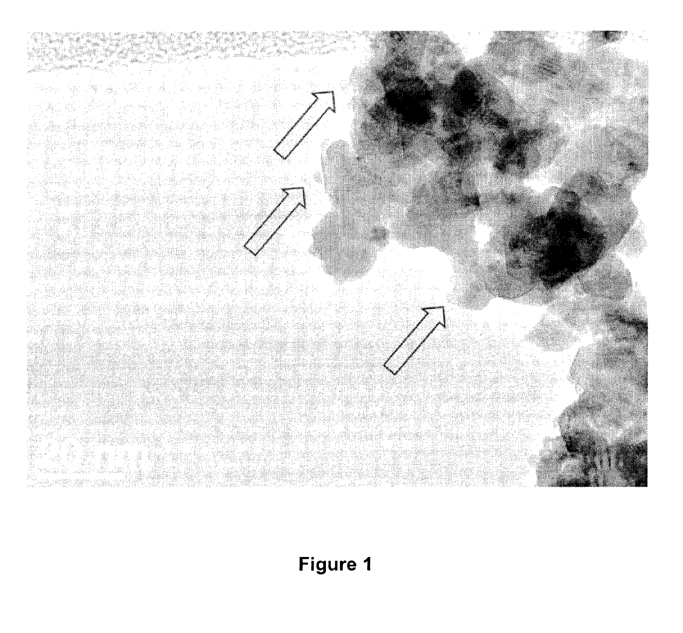

Nickel and cobalt metal surface area of 1.71 $m^2$ per gram of pre-reduced fresh catalyst was determined using CO chemisorption technique, which corresponds to the average bimetallic particle size of 5.9 nm. Using TEM microscopy, the presence of active metallic particles of 6 nm in diameter was confirmed (Figure 1).

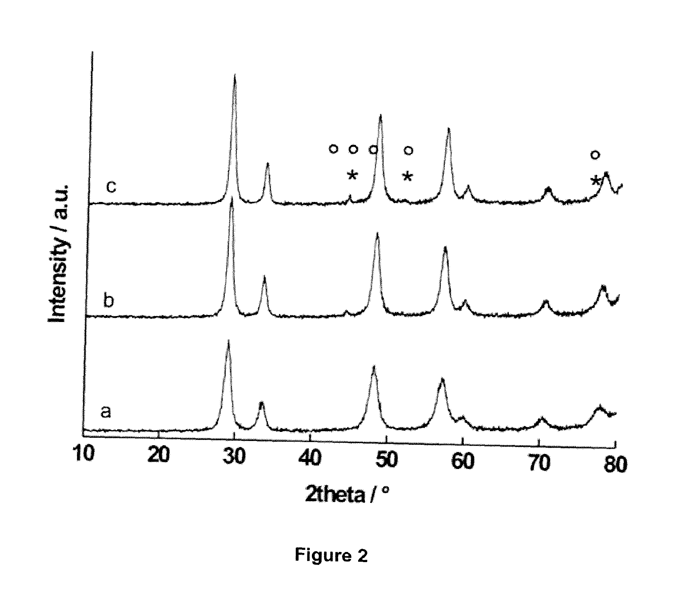

Powder XRD characterization of the $3NiCo/Ce_{0.8}Zr_{0.2}O_2$ catalyst (Figure 2) shows broad diffraction maxima corresponding to a fcc fluorite structure of $CeO_2$. Shifted diffraction maxima to higher 2 theta values, compared to pure $CeO_2$ (PDF standard 00-034-0394), were observed for the synthesized $Ce_{0.8}Zr_{0.2}O_2$ material. The observed shift originates from the substitution of $Ce^{4+}$ with smaller isovalent $Zr^{4+}$ ions in the crystalline structure of $CeO_2$ and formation of a solid solution, resulting in the shrinkage of the unit cell size and high tension within the crystalline lattice.

*Effect of $CH_4$/CO ratio*

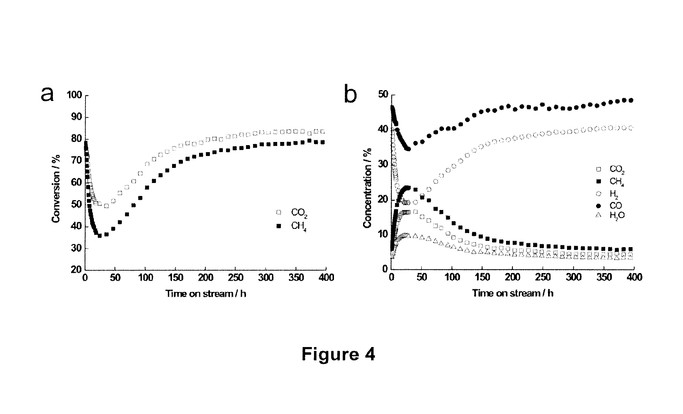

Methane and $CO_2$ conversions, as well as reactor outlet composition measured during reforming of equimolar $CH_4$/$CO_2$ stream with $3NiCo/Ce_{0.8}Zr_{0.2}O_2$ catalyst at 1023 K, are presented in Figure 4. A considerable deactivation in the initial 30 h TOS was observed, followed by a slow catalyst regeneration and achievement of a near steady state after about 400 h of time on stream.

$H_2$/CO ratio in the produced syngas was also strongly affected during the catalytic activity decrease and dropped from the initial value of 0.86 to 0.54 at 30 h TOS, followed by a slow increase and achieved a final value of 0.85 at 400 h TOS. Besides $H_2$ and CO, water was the only reaction product formed. Table 4 summarizes $CH_4$ and $CO_2$ conversions with accompanying $H_2$, CO and $H_2O$ yields at different times on stream.

**Table 4.** Conversion and product yields obtained during reforming of $CH_4$ and $CO_2$ at different times on stream using a $3NiCo/Ce_{0.8}Zr_{0.2}O_2$ catalyst.

| $CH_4/CO_2$ ratio | Time on Stream h | $CH_4$ Conversion % | $CO_2$ Conversion % | [a]$H_2$ yield % | [b]CO yield % | [c]$H_2O$ yield % |
|---|---|---|---|---|---|---|
| 1 | 0 | 78 | 77 | 68 | 79 | 6.1 |
| 1 | 30 | 36 | 50 | 25 | 46 | 12.7 |
| 1 | 400 | 79 | 84 | 71 | 85 | 6.1 |
| 1.5 | 0 | 65 | 90 | 59 | 75 | 1 |
| 1.5 | 30 | 41 | 70 | 34 | 54 | 5.6 |
| 1.5 | 80 | 55 | 85 | 49 | 68 | 2.7 |
| 2.33 | 0 | 47 | 97 | 43 | 60 | 0.4 |
| 2.33 | 30 | 42 | 91 | 37 | 56 | 0.4 |
| 2.33 | 80 | 42 | 90 | 36 | 56 | 0.7 |

[a] $H_2$ yield = (moles of $H_2$ in products)/(2x moles of $CH_4$ in reactants). [b] CO yield = (moles of CO in products)/(moles of $CH_4$ and CO in reactants). [c] $H_2O$ yield = (moles of $H_2O$ in products)/(2x moles of $CH_4$ in reactants).

Water yield was the highest when the lowest $CH_4$ and $CO_2$ conversions were observed and it seems that reverse water gas shift (RWGS) reaction is promoted during the observed catalyst deactivation. RWGS reaction occurs in parallel to the methane-$CO_2$ reforming reaction, resulting in higher recorded $CO_2$ conversion, compared to that of methane, $H_2$/CO ratio in produced syngas below 1 and water production.

$CO_2 + H_2 \leftrightarrow H_2O + CO$ **(RWGS reaction)**

In the near steady state at 400 h TOS, the $NiCo/Ce_{0.8}Zr_{0.2}O_2$ catalyst achieved 79 and 84 % $CH_4$ and $CO_2$ conversion with the yields of hydrogen, CO and water equal to 71, 85 and 6.1 %, respectively. These values closely resemble the performance of supported 1 wt. % noble metal catalysts (Pd, Ru, Rh and Ir, as reported by) with no accompanying coke accumulation and thus reveal the possibility of successful utilization of transition metal based catalysts for the $CH_4$-$CO_2$ reforming reaction with no co-fed water.

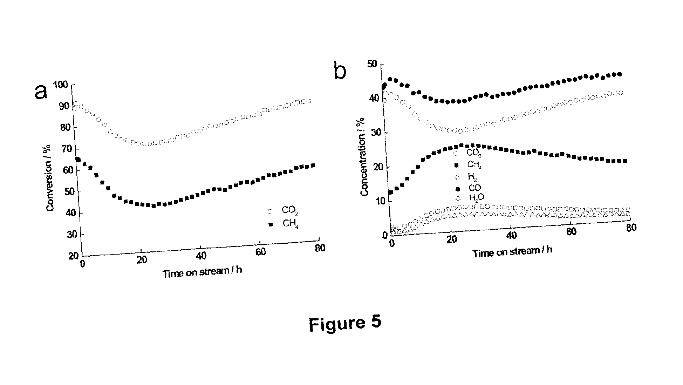

Upon exposing a fresh $3NiCo/Ce_{0.8}Zr_{0.2}O_2$ catalyst sample to a feed stream containing $CH_4/CO_2$ ratio of 1.5 (Figure 5), a similar but less pronounced trend of catalyst deactivation followed by a slow reactivation was noticed, compared to the test with an equimolar $CH_4/CO_2$ feed.

Peak water yield at 30 h TOS was 5.6 %, which is substantial lower compared to the value of 12.7 %, measured at 30 h TOS during the experiment with equimolar $CH_4/CO_2$ feed, presented in Figure 4b. Due to the positive RWGS equilibrium dependence on $CO_2$ partial pressure, it is expected that with increasing deviation of feed $CH_4/CO_2$ ratio from equimolar stoichiometry, the RWGS contribution can be reduced, and consequently also the amount of water formed as a side product.

Exactly this can be observed by comparing reactor exit gas compositions in Figures 4b-6b. Additional, due to a large surplus of methane, its large portion is not converted due to the achievement of equilibrium conversion of $CO_2$ as the limiting reactant. This results in a poor utilization of feed and consequently lower product yields, compared to the equimolar feed (Table 4).

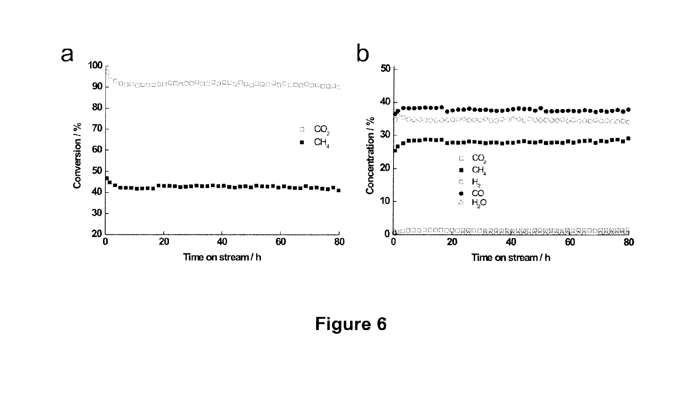

By further increasing $CH_4/CO_2$ ratio in the feed stream to 2.33, stable catalytic operation was observed (Figure 6). $CO_2$ and $CH_4$ conversion values equaling to 91 and 42 %, respectively, were calculated and the produced $H_2$/CO ratio was stable at 0.92. Water yield throughout the experiment was relatively constant at 0.4-0.7 %.

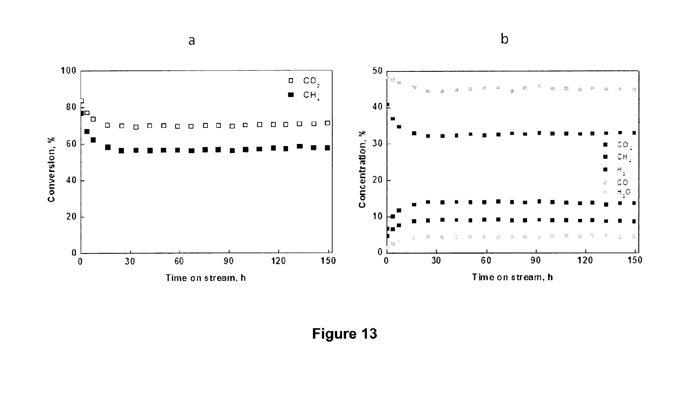

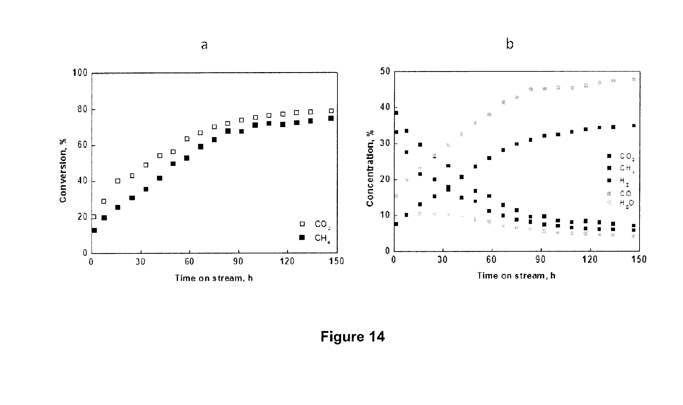

The effect of calcination temperature on catalytic activity of $3NiCo/Ce_{0.8}Zr_{0.2}O_2$ catalysts in the methane dry reforming reaction is significant (see Figures 13-15). Calcination at 823 K produces a catalyst with a relatively high specific surface area (Table 5) and finely dispersed NiCo phase, which results in high activity for methane dry reforming, low water yield and stable long-term operation of the catalyst with no fluctuation in catalyst activity. After the performed reforming test, a relative decrease of specific surface area of 60 % was measured, which indicates the occurrence of catalyst sintering. After the initial 20 h TOS, stable conversions of $CH_4$ and $CO_2$ equaling 57 and 70 %, respectively, were achieved with corresponding $H_2$, CO and $H_2O$ yields equal to 49, 67 and 6.4 %, respectively.

**Table 5:** BET specific surface area and $H_2$, COa nd $H_2O$ yields for the 3NiCo/Ce$_{0.8}$Zr$_{0.2}$O$_2$ catalyst calcined at different temperatures.

| Calcination temperature,°C | BET, m$^2$/g | | H$_2$ yield, % | | CO yield, % | | H$_2$O yield, % | | Accumulated carbon, wt. % |
|---|---|---|---|---|---|---|---|---|---|
| | Before reaction | After reaction | 0 h TOS | 150 h TOS | 0 h TOS | 150 h TOS | 0 h TOS | 150 h TOS | |
| 823 | 60.3 | 24.1 | 70 | 49 | 83 | 67 | 2.6 | 6.4 | 1.85 |
| 1023 | 29.4 | 17.3 | 8.4 | 59 | 17 | 81 | 10 | 6.9 | 0.56 |
| 1123 | 12.9 | 11.8 | 6.4 | 49 | 8.7 | 69 | 9 | 7.8 | 1.13 |

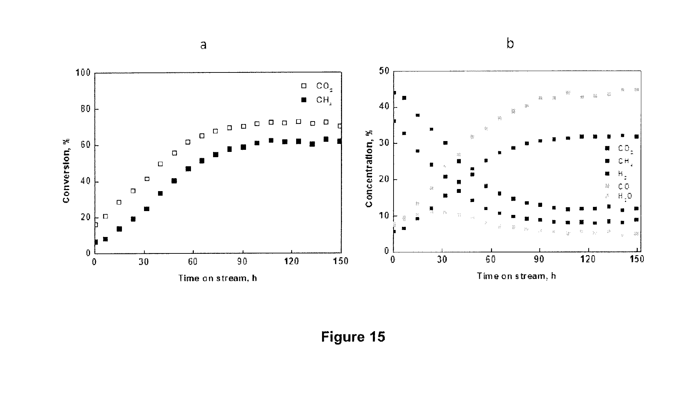

Upon increasing of calcination temperature to 1023 K, the initially low catalytic activity (CH$_4$ and CO$_2$ conversion equal to 13 and 20 %, respectively) increased slowly with time, reaching a near steady state of 75 and 79 % CH$_4$ and CO$_2$ conversion, respectively, after 150 h TOS. A 41 % relative decrease of BET surface area was observed during the performed reforming test. The reactivation becomes even more pronounced when catalyst calcination temperature is further increased to 1123 K, which resulted in the initial CH$_4$ and CO$_2$ conversions equal to 7 and 16 %, respectively (Figure 15). The CH$_4$ and CO$_2$ conversions rose to 62 and 70 % in the 100 h time period before reaching a near steady state. The relative surface area decrease in this case was 9 %.

*Catalyst structure after reaction*

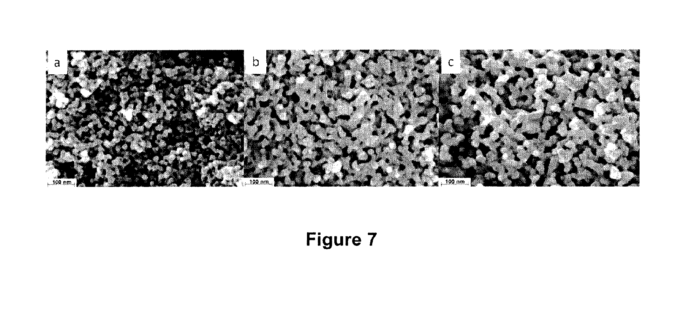

BET surface area of the SNiCo/Ce$_{0.8}$Zr$_{0.2}$O$_2$ catalyst during reforming of equimolar CH$_4$-CO$_2$ stream (Figure 4) was found to decrease from the initial value of 38.1 to 26.7 m$^2$/g after 30 h and finally to 19.1 m$^2$/g after 400 h time of reaction. In parallel, total pore volume of the tested material was found to slowly decrease with a simultaneous increase of average pore diameter (Table 3). This is in accordance with SEM analysis (Figure 7), where necking and recrystallization of the initially present cube-like Ce$_{0.8}$Zr$_{0.2}$O$_2$ crystallites towards more polyhedral shape was observed.

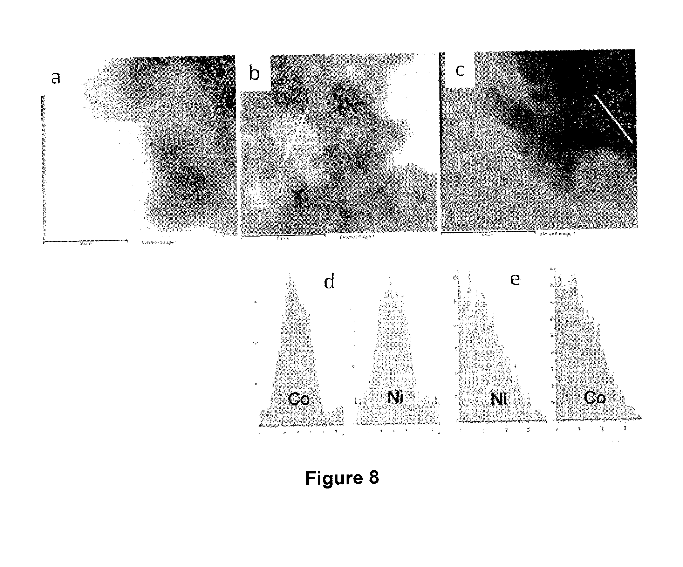

In parallel to the observed morphological changes by N$_2$ physisorption method, total nickel and cobalt specific surface area, determined from CO chemisorption data, was also found to decrease about three fold in the initial 30 h TOS and another 3 fold in the remaining 370 h of reaction (Table 3) resulting in the calculated average NiCo bimetallic particle size increase from 5.9 nm to 46 nm. Additional information about NiCo morphology changes was obtained with TEM-EDX characterization (Figure 8).

Very finely dispersed nickel-cobalt clusters, densely covering the Ce$_{0.8}$Zr$_{0.2}$O$_2$ support were observed during TEM-EDX surface mapping of the fresh catalyst (Figure 8a). Finely dispersed NiCo phase was still present on the catalyst after 30 h TOS with the coexistence of larger 20-30 nm particles (Figure 8b). The continuously increasing average active bimetallic particle size is not consistent with the observed fluctuation of the catalytic activity. Namely, the fact that active metal surface area during the experiment decreased for an order of magnitude, whereas catalytic performance hardly changed indicates the occurrence of a parallel phenomenon, which caused the observed activity swing.

The intrinsic activity of nickel and cobalt in methane reforming reactions is substantially different. Line TEM-EDX analysis was performed on the metallic clusters to inspect if the distribution of both metals and their changes with time on stream (TOS), **Table 6**, to clarify the observation that a tenfold decrease in active metal surface area does not have a prominent effect on the catalyst deactivation, as can be seen by comparing values in Tables 3 and 4.

By comparing Ni and Co concentration profiles (Figures 8d and 8e) along the inspection line (depicted yellow in Figures 8b and 8c), it was observed they are stable at 30 and 400 h TOS, indicating a homogeneous chemical composition within active particles. Consequently, surface enrichment of bimetallic particles with cobalt, which would result in the observed lower catalytic activity at intermediate time on stream, can be rejected as a possible cause of deactivation. TEM line scan analysis also shows that no decoration of NiCo clusters by ceria took place.

Area (approximately 100 x 100 nm) TEM-EDX analysis of the samples at different times on stream revealed that at 30 h TOS oxygen content was significantly higher compared to the fresh catalyst, or catalyst after 400 h TOS (Table 5). This is in accordance with the highest water content detected at the reactor outlet stream and can be reasoned with the water contributing to the partial oxidation of the catalyst, leading to its deactivation.

**Table 6.** Chemical composition of catalysts after different times on stream, as obtained by TEM-EDX analysis.

| Time on stream, h | O, wt. % | Ce, wt. % | Zr, wt. % | Co, wt. % | Ni, wt. % |
|---|---|---|---|---|---|
| 0 | 78.79 | 17.80 | 2.97 | 0.29 | 0.15 |

(continued)

| Time on stream, h | O, wt. % | Ce, wt. % | Zr, wt. % | Co, wt. % | Ni, wt. % |
|---|---|---|---|---|---|
| 30 | 83.59 | 13.35 | 2.17 | 0.57 | 0.32 |
| 400 | 82.00 | 14.15 | 2.45 | 0.85 | 0.55 |

Amounts of carbonaceous deposits, identified over $3NiCo/Ce_{0.8}Zr_{0.2}O_2$ catalyst at 0, 30 and 400 h TOS (when the material exhibited very different catalytic activity) are comparable to the value for the fresh catalyst (Table 3), which is a remarkable achievement and very rarely observed when transition metal catalysts are used to perform the methane dry reforming reaction at relevant reaction conditions.

## *Re-activation*

Temperature programmed reduction of $3NiCo/Ce_{0.8}Zr_{0.2}O_2$ catalysts after different TOS was performed to inspect changes in their oxygen storage capacity. This property is crucial and enables oxygen transfer from the oxygen vacancy sites, which act as $CO_2$ dissociation sites, to the metal-support interface where the oxygen species react with partly hydrogenated carbon species to produce CO and $H_2$ and thus prevent coke accumulation.

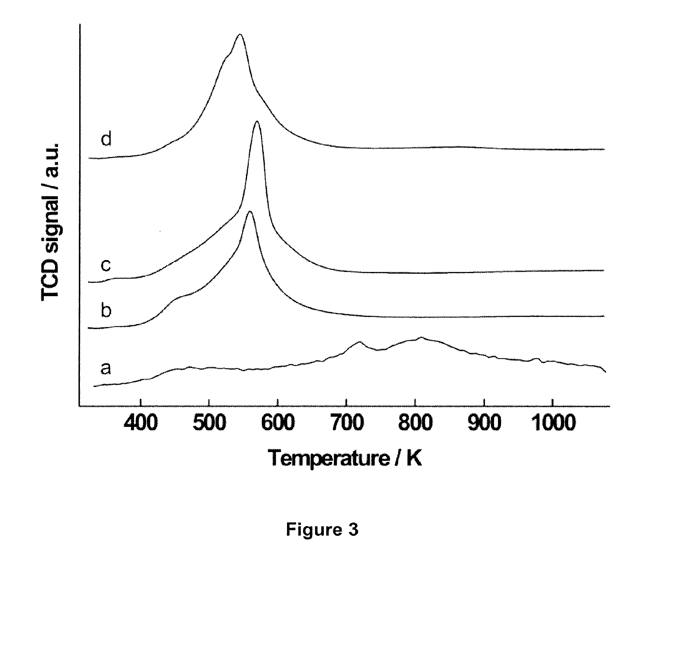

Temperature programmed reduction profiles after 30 and 400 h TOS are compared with the fresh catalyst in Figure 3. Reduction of these samples takes place between 423 and 723 K and the main reduction peak shifts towards lower temperatures (from 570 to 545 K) with prolonging reaction times, which corresponds to a more facile oxygen removal after 400 h reaction time. Low temperature shoulder at about 453 K could be observed for the $Ce_{0.8}Zr_{0.2}O_2$ support prior to active metal deposition and is also present in the fresh $3NiCo/Ce_{0.8}Zr_{0.2}O_2$ catalyst. This can be correlated to the ultra-low temperature removal of surface capping oxygen atoms from nanosized ceria crystallites. The intensity of this shoulder decreases in the initial 30 h time on stream, which can be caused by catalyst sintering and consequently partial elimination of these crystalline planes due to gradual CeZr morphology change towards more irregular, polyhedral particles (Figure 7).

Quantities of hydrogen consumed during $H_2$-TPR experiments for catalysts after 30 and 400 h TOS were similar for both cases and sufficient for 39.1 and 40.6 % $Ce^{4+}$ to $Ce^{3+}$ transformation, which equal to oxygen storage capacity of 0.56 and 0.58 mmol O/g $Ce_{0.8}Zr_{0.2}O_2$, respectively. For this calculation it was assumed that nickel and cobalt do not form non- or hardly-reducible spinel/type compounds with the $Ce_{0.8}Zr_{0.2}O_2$ support, as is common with magnesia and alumina based supports which could be confirmed by the absence of high temperature reduction peaks in the recorded $H_2$-TPR spectra.

Higher oxygen storage capacity of the $Ce_{0.8}Zr_{0.2}O_2$ corresponds to the regenerated methane reforming catalytic activity after 400 h time on stream.

It is known that calcination of $CeZrO_2$ solid solutions at temperatures between 773 and 1173 K favors exposure of (110) and (100) crystalline planes on behalf of diminution of initially most exposed densely packed (111) planes. Additionally, energy required for an oxygen vacancy formation on the crystalline plane of $CeO_2$ is predicted to increase in the following order: (100) < (110) < (111), which is in accordance with the recorded shift in the reduction profiles toward lower temperatures with prolonging reaction time during this work.

It is known from CO oxidation reaction that some crystalline planes of ceria are more reactive than others, and this property originates from the readiness of oxygen vacancy formation on them. Analogously, prolonged exposure of $NiCo/Ce_{0.8}Zr_{0.2}O_2$ catalysts to high temperature, as encountered during methane dry reforming reaction, is likely to cause structural modifications of ceria-zirconia solid solution with pronounced exposure of (110) and (100) crystalline planes. This could be manifested through improved catalytic activity, resulting from higher oxygen mobility on the newly developed crystalline planes. Additionally, migration of oxygen vacancies should be improved in these less dense crystalline planes compared to the (111), due to less steric hindrances. Consequently, its contribution to improved catalytic performance exists in the investigated system.

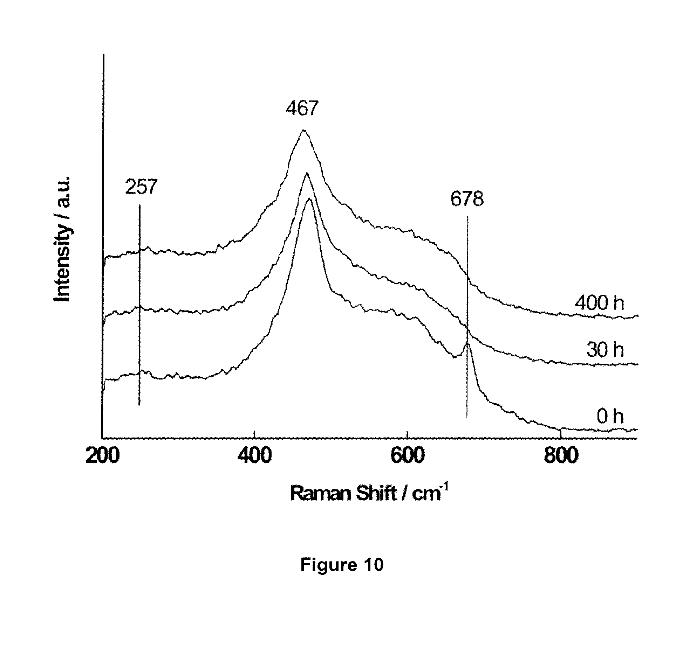

Due to the low sensitivity of the XRD technique to the oxygen sub lattice, Raman spectra of $3NiCo/Ce_{0.8}Zr_{0.2}O_2$ catalysts after different times on stream were collected in the range of 200-900 $cm^{-1}$, where absorption due to M-O stretching is observed (Figure 10). Six Raman-active modes of $A_{1g} + 3Eg + 2B_{1g}$ symmetry are expected for tetragonal $ZrO_2$ (space group *P42/nmc*) at 181, 260, 308, 338, 470 and 648 $cm^{-1}$, while in pure $CeO_2$ (Fm3m space group), only $F_{2g}$ mode is Raman active and expected at 465 $cm^{-1}$,

Presented Raman spectra are dominated by a strong band at 467 $cm^{-1}$, which is attributed to the $F_{2g}$ mode of $CeO_2$. In addition, a broad band between 550 and 650 $cm^{-2\,1}$ can be seen to grow in intensity with increasing time on stream. Also, a weak band at 257 $cm^{-1}$ is distinguishable for all materials. These bands are associated with transverse and longitudal optical phonon modes, which can originate from perturbations in the fluorite structure. The fresh $3NiCo/Ce_{0.8}Zr_{0.2}O_2$ catalyst reveals also a band at 678 $cm^{-1}$, which can be assigned to separate t-$ZrO_2$ phase in the

synthesized catalyst, which could not be identified using XRD technique. The remaining t-$ZrO_2$ bands are not observed, likely due to being superimposed on ceria bands. After 30 h time on stream, disappearance of t-$ZrO_2$ phase is observed (elimination of band at 678 $cm^{-1}$) which is caused by $Zr^{4+}$ ion migration and incorporation into the $CeO_2$ lattice. In parallel, formation of $Ce_{0.8}Zr_{0.2}O_2$ solid solution causes broadening of the $F_{2g}$ band at 467 $cm^{-1}$, indicating increased structural disorder and diminution of long-range order of the oxygen sub lattice in the $Ce_{0.8}Zr_{0.2}O_2$ solid solution with prolonged time on stream. In summary, Raman analysis clearly points out a M-O bond symmetry decrease in the analyzed samples during prolonged exposure to methane dry reforming reaction conditions, which facilitates the formation of mobile oxygen species in the distorted $CeO_2$ lattice, which was suspected as a possible origin of the promotion of reduction behavior upon sintering.

XRD analysis of 3NiCo/$Ce_{0.8}Zr_{0.2}O_2$ catalyst (Figure 2) with prolonging time on stream revealed intensification of diffraction signals, characteristic of $Ce_{0.8}Zr_{0.2}O_2$ support and a weak peak emerging at 44.40 degrees 2theta angle, which can be attributed to the reflection from the (111) crystalline plane of fcc NiCo alloy phase. Structure of NiCo alloys is known to depend on their chemical composition. At low nickel content, the NiCo alloy adopts a hep structure, while from 50 % Ni concentration and above, fcc becomes the dominant phase.

Evolution of XRD spectra with prolonged time on stream is consistent with sintering of the support (increase of $Ce_{0.8}Zr_{0.2}O_2$ crystalline domain size from 7.9 to 10.5 and ultimately to 12.3 nm at 0, 30 and 400 h TOS was calculated) as identified using $N_2$ sorption method and growth of bimetallic NiCo particles, observed by TEM-EDX and CO chemisorption techniques.

Unit cell size of the $Ce_{0.8}Zr_{0.2}O_2$ was calculated at different times on stream and a constant value of 0.5341 nm was obtained for 30 and 400 h TOS, respectively. Before nickel and cobalt deposition this value was 0.5349 nm. This is somewhat lower compared to the theoretical value of 0.5359 nm for pure $Ce_{0.8}Zr_{0.2}O_2$ solid solution and is very likely a consequence of planar defects (stacking faults), present in the nanocrystalline structure of the support material.

Considering that nickel and cobalt were deposited on the already formed high surface area $Ce_{0.8}Zr_{0.2}O_2$ support and that a considerable morphology alteration was observed during calcination for 4 h at 923 K (specific surface area decreased from 120.9 to 38 $m^2/g$), it is more likely that nickel and cobalt phase was initially encapsulated between grains of the sintered CeZr support, forming a separate phase. Nevertheless, $Ce_{0.8}Zr_{0.2}O_2$ unit cell size was constant with TOS, which is in line with the results of Raman analysis, where complete Zr incorporation into $Ce_{0.8}Zr_{0.2}O_2$ structure after 30 h of reaction was observed.

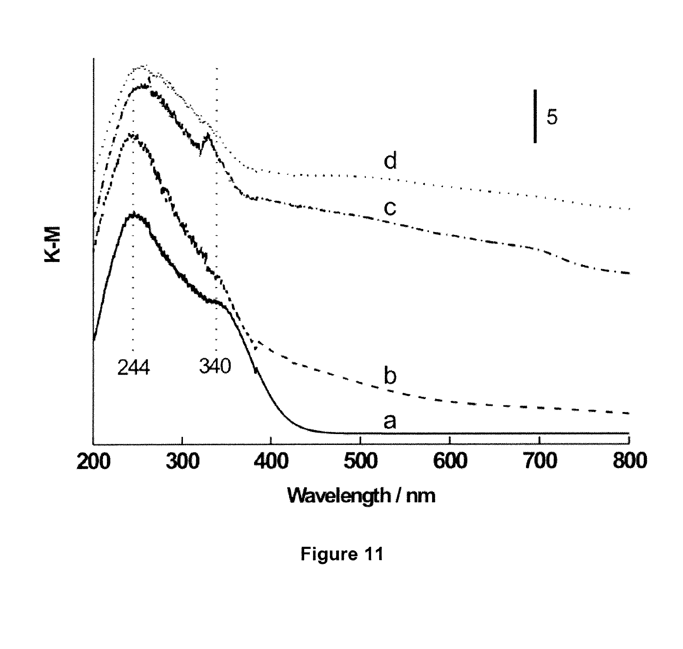

UV-Vis spectroscopy can be effectively used to obtain information on the surface electronic states, coordination environment of cations and probe the interaction between the metallic particles dispersed over the oxide support. Ceria and zirconia are semiconductors with a bandgap width of 3.1 and 4.5 eV, respectively. Hence, they absorb light with wavelength shorter than 400 and 275 nm. In Figure 11, spectra of $Ce_{0.8}Zr_{0.2}O_2$ and 3NiCo/$Ce_{0.8}Zr_{0.2}O_2$ catalysts, recorded after different times on stream are compared.

Absorption in the UV region is characterized with a maximum at 244 nm, which can be attributed to $Ce^{3+} \leftarrow O^{2-}$ and/or $Zr^{4+} \leftarrow O^{2-}$ charge transfers. Intensity of this absorption feature decreases with prolonging time on stream and roughly correlates with the initial decrease in the amount of reducible $Ce^{3+}$ species in the catalyst samples, as identified with $H_2$-TPR method. For the pure $Ce_{0.8}Zr_{0.2}O_2$ support, absorption bands attributed to $Ce^{3+} \leftarrow O^{2-}$ and/or $Zr^{4+} \leftarrow O^{2-}$ charge transfers are blue shifted while a red shift for the band at wavelength at around 340 nm is observed.

These features are caused by the formation of the ceria zirconia solid solution, which results in distortions of the local coordination environment of cerium cations. The shoulder at 340 nm is characteristic of $Ce^{4+} \leftarrow O^{2-}$ charge transfer and is related to structural distortions, present in nanocrystalline $CeO_2$-rich powders. Indeed, the absorption feature at 340 nm is more pronounced for the nanocrystalline, high surface area $Ce_{0.8}Zr_{0.2}O_2$ solid solution prior to deposition of nickel and cobalt (SBET=120.9 $m^2/g$), compared to the NiCo containing catalysts (BET between 38 and 19 $m^2/g$).

The 400-800 nm range of recorded UV-Vis spectra reveals information on the coordination environment of nickel and cobalt. Due to wide absorption peaks and very similar regions of absorption for both metals, unambiguous identification is not possible. However, changes in the spectra as a result of prolonged time on stream show intensification in broad absorption band at around 450 nm and a shoulder at 695 nm due to $Co^{3+}$ in octahedral positions, as present in $Co_3O_4$.

Absorption peaks in the range between 545 and 635 nm are expected for $Co^{2+}$ in tetrahedral coordination. Similarly, absorption band around 410 nm can be attributed to octahedrally coordinated $Ni^{2+}$ ions, whereas absorption bands at 585 and 630 nm are due to d-d electronic transitions of tetrahedral $Ni^{2+}$ ions. Absorption band at 720 nm is observed when bulk NiO is present in the investigated samples.

*Discussion*

It has been previously identified that cobalt-based catalysts are prone to deactivation by oxidation as a result of co-produced water in the methane dry reforming reaction and Fischer-Tropsch synthesis. Oxidation degree of cobalt is strongly connected to the catalyst support (inert supports like carbon or silica is much less pronounced, compared to titania because redox properties of the latter have an active role in the reaction pathway), presence of secondary metal, such as ruthenium (which can stabilize its metallic form) and also cobalt particle size. Cobalt particles of 5-6 nm in size are reported to be most prone to oxidation and deactivation. A thermodynamic study of oxidation and reduction of nanosized cobalt particles at relevant Fischer-Tropsch reaction conditions reveals that spherical cobalt crystallites with a diameter smaller than 4.4 nm are likely to be oxidized. Additionally, interaction of nanosized cobalt species with the support to form mixed oxides can further emphasize their oxidation and result in catalyst deactivation. Fischer-Tropsch synthesis covers a substantially lower temperature range, and unfortunately these findings cannot be directly applied to reaction conditions used here. Parallels can nevertheless be drawn, as cobalt rich nanoparticles dispersed over reducible ceria-zirconia solid solution are the predominant active species in the investigated catalytic system.

As can be seen from the metal particle size determination, the fresh $3NiCo/Ce_{0.8}Zr_{0.2}O_2$ catalyst contains bimetallic particles with the average diameter of 5.9 nm, making them very susceptible to deactivation by oxidation with water co-produced in the investigated reaction. Additionally, the synthesis of $Ce_{0.8}Zr_{0.2}O_2$ catalyst support was steered towards maximization of oxygen storage capacity and to effectively supply mobile oxygen species to the metal-support interface, where the oxidation of CHx fragments effectively takes place and prevents accumulation of carbonaceous deposits.

As can be seen from Figure 4b, where the reactor outlet composition during methane-$CO_2$ reforming test is presented, the water produced via the simultaneously occurring reverse WGS reaction continues to rise in the initial 25 h of reaction and levels at about 30 h TOS.

Increasing water production is accompanied by a continuous decrease in the methane and $CO_2$ conversion, which indicates that produced water is not further consumed in the methane-water reforming reaction to yield syngas. This is in accordance with previously reported mechanism of the methane-$CO_2$ reforming reaction, where methane-$CO_2$ reforming reaction can be considered a combination of the RWGS and methane steam reforming reactions.

With prolonging time on stream, the catalyst sinters (Table 3 and Figure 2), which results in growth of the average NiCo particle size to 18.5 nm at 30 h TOS. As can be seen in Figure 8b, some nickel and cobalt containing clusters still remain finely dispersed even after 30 h TOS, which due to a high concentration of water remain oxidized and as such inactive in the methane reforming reaction.

Sintering of NiCo particles makes them less susceptible for oxidation. Consequently, $H_2$ (and CO) cause a continuous increase of reduction extent of the growing NiCo particles. As they re-acquire their metallic state, they reclaim an active role in the methane-steam reforming reaction. As a result of ever increasing number of NiCo particles contributes to the methane-steam reforming reaction, water production slowly decreases and an increase in methane and $CO_2$ conversion is observed, resulting in the increased syngas production.

As a result of increasingly reductive atmosphere (increasing $H_2/H_2O$ ratio with time on stream from the minimum value of 2.0 at 30 h TOS to 9.1 at 400 h TOS) and slow but steady growth of NiCo particles, continuous catalyst reactivation occurs (Figure 4a).

Initial catalyst deactivation is fast and it is reasonable to assume that it is a consequence of the gas-solid interaction: oxidation of nanosized NiCo bimetallic particles with water produced by RWGS reaction. On the other hand, time required to reclaim initial catalytic activity is more than an order of magnitude longer (25 h vs. 370 h).

High surface area $Ce_{0.8}Zr_{0.2}O_2$ solid solution (BET of 120.9 $m^2/g$) was used as support for the nickel and cobalt active phases. After metal deposition and calcination it was observed that surface area decreased to 38 $m^2/g$, which allows for entrapment of nickel and cobalt entities in the collapsed pore structure, and between individual $Ce_{0.8}Zr_{0.2}O_2$ grains. With time on stream, specific surface area of the catalyst decreases continuously (Table 3), nickel and cobalt particles due to pore confinement very slowly migrate to the surface and merge, resulting in their enrichment on the surface, as was observed using TEM-EDX (Table 6).

Consequently, it is reasonable to claim that the slow rate of catalyst regeneration is determined by growth of NiCo particles and structural modifications of the $Ce_{0.8}Zr_{0.2}O_2$ support, which changes the bimetallic particle-support interface. A continuous incorporation of Zr into $CeO_2$ lattice to form a homogeneous $Ce_{0.8}Zr_{0.2}O_2$ solid solution, as identified by Raman spectroscopy, and CeZr morphology change from cubic to polyhedral (Figure 7) lead to improved oxygen storage capacity. Apparently, this plays a crucial role in the catalyst regeneration process and contributes to the overall reforming reaction, because a tenfold decrease in NiCo surface area (Table 3) results in very similar catalytic activity, as can be observed at approximately 1 and 400 h TOS.

To overcome the negative effect of oxidation as a source of deactivation for $3NiCo/Ce_{0.8}Zr_{0.2}O_2$ catalysts, it can be stressed here that the initial 10 minutes of reforming reaction were always performed in the presence of co-fed 5 vol. % hydrogen, as reported previously.

In order to verify the negative influence of water that causes reversible deactivation of the catalyst, a feed consisting of a $CH_4/CO_2$ ratio of 1.5 and a fresh catalyst sample were tested. Performance of $3NiCo/Ce_{0.8}Zr_{0.2}O_2$ catalyst with a $CH_4/CO_2$ feed ratio of 1.5 is presented in Figure 5. As can be seen, the observed catalyst deactivation was much less pronounced compared to the test with an equimolar feed of both reactants (Figure 4). As the $H_2/H_2O$

ratio in the produced syngas decreases from the initial value of 51 at 1 h TOS to 6.4 at 25 h TOS, conversions of methane and $CO_2$ decreased from 65 and 90 % to 41 and 70 %, respectively. It can be concluded that higher $H_2/H_2O$ ratios, compared to those measured during the test with equimolar $CH_4/CO_2$ feed, result in a smaller fraction of most finely dispersed oxidized NiCo bimetallic particles. Consequently, the extent of catalyst deactivation is lower.

A more water depleted gas stream should be able to oxidize only the smallest NiCo particles, which are also most susceptible to sintering and growth. It is then reasonable to expect that they will reach and surpass the required size for their re-reduction sooner and the reactivation of the catalyst should be faster. Indeed, after 80 h TOS, the $H_2/H_2O$ ratio of 18 is attained and conversions of $CO_2$ and methane are approaching the initial values.

Stable catalytic performance with no apparent swing in activity was observed when $CH_4/CO_2$ feed ratio was increased to 2.33 (Figure 6). $H_2/H_2O$ ratio during this run was between 50 and 180 and it seems this ratio provides a sufficiently reducible atmosphere to prevent any oxidation of the nickel and cobalt phase, which would lead to catalyst deactivation.

Calcination of 3NiCo/ $Ce_{0.8}Zr_{0.2}O_2$ catalyst at 823 K results in a highly dispersed NiCo bimetallic phase which exhibits low WGS selectivity and water yield between 2.6 and 6.4 % (Table 5). These values are too low to cause excessive NiCo oxidation and deactivation, which results in stable catalytic performance. By comparing amounts of carbon deposits on the differently calcined catalysts it becomes clear that higher water yield helps prevent its accumulation (Table 5).

## Statements

1. A carrier material for carrying active metal phases, the carrier material comprising a homogenous solid solution of $Ce_xZr_{1-x}O_{2-y}$ having a face-centred cubic unit cell crystalline structure; wherein x is greater than 0 and less than 1 and y is from 0 to 1; and wherein x is not 0.5.

2. A carrier material according to statement 1, wherein the carrier material has a porosity of at least 0.16 $cm^3$/g.

3. A carrier material according to statement 1 or 2, wherein the carrier material has a specific surface area of 80 $m^2$/g or more as measured by the BET method.

4. A carrier material according to any one of the preceding statements, wherein the carrier material has a specific surface area of 80-145 $m^2$/g as measured by the BET method.

5. A carrier material according to any one of the preceding statements, wherein the carrier material has a high mobility of oxygen in its crystal cage.

6. A carrier material according to any one of the preceding statements, wherein the carrier material is nanocrystalline.

7. A process for making a carrier material for carrying active metal phases, comprising:

a solution formation step of preparing a supersaturated solution of a salt of cerium and of a salt of zirconium and adding the solution to an organic solvent to form a precursor solution;
a crystal formation step of forming suspended solids in the precursor solution;
a collection step of separating the suspended solids from the precursor solution;
a drying step of heating the separated solids; and
a calcination step of heating the solids at a temperature higher than the temperature used in the drying step.

8. A process according to statement 7, wherein the crystal formation comprises aging carried out at a temperature from 300 to 500 K.

9. A process according to statement 7 or 8, wherein the crystal formation step comprises aging carried out for 1 to 20 hours.

10. A process according to any one of statements 7 to 9, wherein the drying step is carried out at a temperature from 250 to 500 K.

11. A process according to any one of statements 7 to 10, wherein the calcination step is carried out for at least 1 hour.

12. A process according to any one of statements 7 to 11, wherein the calcination step is carried out at a temperature of at least 400 K.

13. A process according to any one of statements 7 to 12, wherein the calcination step is carried out with heating of the solids in a stream of dry air.

14. A process according to any one of statements 7 to 13, wherein the collection step is carried out by centrifugation of the precursor solution.

15. A process according to any one of statements 7 to 14, wherein the salt of cerium is cerium nitrate.

16. A process according to any one of statements 7 to 15, wherein the salt of zirconium is zirconium nitrate.

17. A carrier material for carrying active metal phases obtainable by the process of any one of statements 7 to 16.

18. A solid catalyst comprising:

a carrier material according to any one of statements 1 to 6 or according to statement 17; and
an alloy of metals in and or on the carrier material;
the alloy comprising Ni and Co.

19. A solid catalyst according to statement 18, wherein the weight ratio of Ni : Co in the alloy is from 0.4 : 1 to 2.3 : 1.

20. A solid catalyst according to statement 18 or 19, wherein the total amount of Ni and Co deposited on the carrier material is from 1 to 3 % by weight of the solid catalyst.

21. A process for making a solid catalyst, comprising:

an impregnation step of impregnating a carrier material with a source of nickel and a source of cobalt;
a drying step; and
an activation step of heating the dried material in an atmosphere containing hydrogen at a temperature of from 400 to 1500 K.

22. A process according to statement 21, wherein in the impregnation step a homogeneous impregnation is performed.

23. A process according to statement 21 or 22, wherein the carrier material is simultaneous impregnated with the source of nickel and the source of cobalt.

24. A process according to any one of statements 21 to 23, wherein in the impregnation step impregnation is carried out by temperature-programmed hydrolysis of urea.

25. A process according to any one of statements 21 to 24, wherein the atmosphere used in the activation step has a $H_2$ content of 20 vol%.

26. A process according to any one of statements 21 to 25, wherein the activation step is carried out for one hour.

27. A process according to any one of statements 21 to 26, wherein in the activation step the atmosphere containing hydrogen is made to flow over the dried impregnated carrier material.

28. A process according to statement 27, wherein the flow rate of the atmosphere is 50NmL/min.

29. A process according to any one of statements 21 to 28, further comprising:

a calcination step, between the drying step and the activation step, of calcining the dried material at a temperature of 700 to 1300 K.

30. A process according to statement 29, wherein the calcination step is carried out for 3 hours.

31. A process according to any one of statements of 21 to 30, wherein the carrier material is as defined in any one of statements 1 to 6.

32. A process according to any one of statements 21 to 31, wherein the carrier material is obtained by a process as defined in any one of statements 7 to 16.

33. A process according to any one of statements 21 to 32, wherein the source of nickel is nickel nitrate.

34. A process according to any one of statements 21 to 33, wherein the source of cobalt is cobalt nitrate.

35. A solid catalyst obtainable by the process of any one of statements 21 to 34.

36. A process for making syngas, comprising
contacting a gas mixture containing methane and carbon dioxide with a solid catalyst at a temperature of 800 to 1400 K and a pressure of 0.5 to 20 bar;
wherein the gas mixture contains methane and carbon dioxide in an average volume ratio of 0.3 : 1 to 2.5 : 1.

37. A process according to statement 36, wherein the solid catalyst is a catalyst as defined in any one of statements 18 to 20 or as defined in statement 35.

38. A process according to statement 36 or 37, wherein the gas mixture is made to flow over the solid catalyst.

39. A process according to statement 38, wherein the flow rate of the gas mixture is 100NmL/min.

**Claims**

1. A carrier material for carrying active metal phases, the carrier material comprising a homogenous solid solution of $Ce_xZr_{1-x}O_{2-y}$ having a face-centred cubic unit cell crystalline structure; wherein x is greater than 0 and less than 1 and y is from 0 to 1; and wherein x is not 0.5.

2. A carrier material according to claim 1, wherein the carrier material has a porosity of at least 0.16 $cm^3$/g or has a specific surface area of 80 $m^2$/g or more as measured by the BET method.

3. A process for making a carrier material for carrying active metal phases, comprising:

   a solution formation step of preparing a supersaturated solution of a salt of cerium and of a salt of zirconium and adding the solution to an organic solvent to form a precursor solution;
   a crystal formation step of forming suspended solids in the precursor solution;
   a collection step of separating the suspended solids from the precursor solution;
   a drying step of heating the separated solids; and
   a calcination step of heating the solids at a temperature higher than the temperature used in the drying step.

4. A process according to claim 3, wherein the organic solvent comprises one or more selected from the group comprising: polyols; low molecular weight organic acid with one to five carbon atoms; mono-esters of polyols; di-esters of polyols; mono-esters of low molecular weight organic acid with one to five carbon atoms; and di-esters of low molecular weight organic acid with one to five carbon atoms.

5. A process according to claim 3 or claim 4, wherein the organic solvent comprises one or more of ethylene glycol, propionic acid and mono- and di-esters of ethylene glycol and propionic acid.

6. A process according to any one of claims 3 to 5, wherein the crystal formation comprises aging carried out at a temperature from 300 to 500 K; or
wherein the drying step is carried out at a temperature from 250 to 500 K; or
wherein the calcination step is carried out at a temperature of at least 400K.

7. A solid catalyst comprising:

a carrier material according to any one of claims 1 to 2; and
an alloy of metals in and or on the carrier material;
the alloy comprising two or more metals chosen from Ni, Co, Sn, B, W and Mo.

8. A solid catalyst according to claim 7, wherein the alloy comprises Ni and Co.

9. A solid catalyst according to claim 8, wherein the weight ratio of Ni : Co in the alloy is from 0.4 : 1 to 2.3 : 1 or the total amount of Ni and Co deposited on the carrier material is from 1 to 3 % by weight of the solid catalyst.

10. A process for making a solid catalyst, comprising:

an impregnation step of impregnating a carrier material with a source two or more metals chosen from Ni, Co, Sn, B, W and Mo ;a drying step; and
an activation step of heating the dried material in an atmosphere containing hydrogen at a temperature of from 400 to 1500 K.

11. A process according to claim 10 wherein the metals comprise Ni and Co.

12. A process according to claims 10 or 11, wherein in the impregnation step a homogeneous impregnation is performed or in the impregnation step impregnation is carried out by temperature-programmed hydrolysis of urea.

13. A process according to any one of claims 10 to 12, further comprising:

a calcination step, between the drying step and the activation step, of calcining the dried material at a temperature of 700 to 1300 K.

14. A process according to any one of claims of 10 to 13, wherein the carrier material is as defined in any one of claims 1 to 2 or is obtained by a process as defined in any one of claims 3 to 6.

15. A process for making syngas, comprising
contacting a gas mixture containing methane and carbon dioxide with a solid catalyst at a temperature of 800 to 1400 K and a pressure of 0.5 to 20 bar;
wherein the gas mixture contains methane and carbon dioxide in an average volume ratio of 0.3 : 1 to 2.5 : 1; and
wherein the solid catalyst is a catalyst as defined in any one of claims 7 to 9 or as obtained in any one of claims 10 to 14.

**Figure 1**

Figure 2

Figure 3

Figure 4

Figure 5

**Figure 6**

**Figure 7**

Figure 8

Figure 9

Figure 10

Figure 11

**Figure 12**

a
b

**Figure 13**

Figure 14

Figure 15

Europäisches
Patentamt

European
Patent Office

Office européen
des brevets

## EUROPEAN SEARCH REPORT

Application Number

EP 14 46 8002

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FURTADO A C ET AL: "Bimetallic catalysts performance during ethanol steam reforming: Influence of support materials", INTERNATIONAL JOURNAL OF HYDROGEN ENERGY, ELSEVIER SCIENCE PUBLISHERS B.V., BARKING, GB, vol. 34, no. 17, 1 September 2009 (2009-09-01), pages 7189-7196, XP026459633, ISSN: 0360-3199 [retrieved on 2009-07-24] * paragraph [03.1] * * table 1 * | 1,2 | INV. B01J37/03 B01J37/18 B01J21/06 B01J23/75 B01J23/755 B01J35/02 B01J35/10 B01J37/02 C01B3/40 |
| X | PETAR DJINOVI ET AL: "Influence of active metal loading and oxygen mobility on coke-free dry reforming of NiCo bimetallic catalysts", APPLIED CATALYSIS B: ENVIRONMENTAL, ELSEVIER, AMSTERDAM, NL, vol. 125, 30 May 2012 (2012-05-30), pages 259-270, XP028409378, ISSN: 0926-3373, DOI: 10.1016/J.APCATB.2012.05.049 [retrieved on 2012-06-07] * page 260, right-hand column, paragraph 3 - paragraph 6 * * page 261, left-hand column * * page 263, left-hand column, paragraph 3 * * table 1 * | 1-15 | |
| A | US 2011/237689 A1 (BAE JONG WOOK [KR] ET AL) 29 September 2011 (2011-09-29) * the whole document * | 1-15 | |

TECHNICAL FIELDS SEARCHED (IPC)

B01J
B01D
C01B

The present search report has been drawn up for all claims

| Place of search | Date of completion of the search | Examiner |
|---|---|---|
| Munich | 29 August 2014 | Zieba, Roman |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

Application Number

EP 14 46 8002

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 14 46 8002

The Search Division considers that the present European patent application does not comply with the requirements of unity of invention and relates to several inventions or groups of inventions, namely:

1. claims: 1-6

    A carrier material comprising a solid solution of $Ce_xZr_{1-x}O_{2-y}$ having a face-centered cubic unit cell crystalline structure and wherein x is greater than o and less than 1 and y is from 0 to 1 and wherein x is not 0.5. A process of making said carrier material.

    ---

2. claims: 7-15

    A solid catalyst comprising the support of the above invention 1 and an alloy of two or more metals chosen from Ni,Co,Sn,B,W and Mo. A process of making said solid catalyst and a process for making syngas using said solid catalyst.

    ---

## ANNEX TO THE EUROPEAN SEARCH REPORT
## ON EUROPEAN PATENT APPLICATION NO.

EP 14 46 8002

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2014

| Patent document cited in search report | Publication date | Patent family member(s) | Publication date |
|---|---|---|---|
| US 2011237689 A1 | 29-09-2011 | AU 2009325375 A1 | 21-07-2011 |
| | | CN 102307835 A | 04-01-2012 |
| | | EP 2371799 A1 | 05-10-2011 |
| | | JP 5405588 B2 | 05-02-2014 |
| | | JP 2012511043 A | 17-05-2012 |
| | | KR 20100065504 A | 17-06-2010 |
| | | US 2011237689 A1 | 29-09-2011 |
| | | WO 2010067945 A1 | 17-06-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009045112 A1
- US 20110105630 A1
- US 5744419 A
- US 7985710 B2

**Non-patent literature cited in the description**

- **K. LIU ; C. SONG ; V. SUBRAMANI.** Hydrogen and Syngas Production and Purification Technologies. Wiley, 2010, 6-7
- **LAOSIRIPOJAN ; ASSABUMRUNGRAT.** *Appl Catal B,* 2005, vol. 60, 107-116
- *Fuel,* 1986, vol. 65, 1377-1382
- *Appl Catal A,* 2007, vol. 329, 68-78
- *Chem Eng Sci,* 1988, vol. 43, 3049-3062
- *Fuel Process Technol,* 1995, vol. 42, 269-289
- *Appl Catal A,* 1998, vol. 170, 177-187
- *J Catal,* 2008, vol. 255, 259-268
- **DJINOVI et al.** *Chem Eng Process,* 2011, vol. 50, 1054-1062
- *J Catal,* 2007, vol. 249, 300-310
- **SAN-JOSÉ-ALONSO et al.** *Appl Catal A,* 2009, vol. 371, 54-59
- *Appl Catal A,* 2007, vol. 317, 299-309
- *Int J Hydrogen Energy,* 2012, vol. 37, 15966-15975
- **S. BRUNAUER ; P. H. EMMETT ; E. TELLER.** *J. Am. Chem. Soc.,* 1938, vol. 60, 309-319